# EUROPÄISCHE PATENTSCHRIFT

(11) **EP 0 535 643 B1**
(45) Veröffentlichungstag und Bekanntmachung des Hinweises auf die Patenterteilung: **26.02.1997**
(21) Anmeldenummer: 92116756.5
(22) Anmeldetag: 30.09.1992
(51) Int. Cl.: C08F 8/28

(54) **Polyvinylacetale mit verbessertem Schmelzviskositätsverhalten, Verfahren zu ihrer Herstellung und ihre Verwendung**
Polyvinyl esters with improved melt viscosity behaviour, process for their manufacture and use thereof
Polyvinylacétals ayant un comportement amélioré de viscosité de fusion, leur procédé de préparation et leur application

(30) Priorität: 04.10.1991 DE 4133023
(43) Veröffentlichungstag der Anmeldung: 07.04.1993
(73) Patentinhaber: HOECHST AKTIENGESELLSCHAFT, 65926 Frankfurt am Main (DE)
(72) Erfinder: Gutweiler, Matthias, Dr., W-6204 Taunusstein 4 (DE); Kroggel, Matthias, Dr., W-6233 Kelkheim i.Ts. (DE)

(56) Entgegenhaltungen:
- EP-A- 0 211 818
- US-A- 2 332 895
- US-A- 2 332 898
- US-A- 2 363 297

## Beschreibung

Die Erfindung betrifft Polyvinylacetale mit verbessertem Schmelzviskositätsverhalten, hergestellt aus niedrigvernetzten, löslichen Polyvinylalkoholen durch Umsetzung mit Aldehyden oder Aldehydacetalen unter Acetalisierungsbedingungen, Verfahren zu ihrer Herstellung und ihre Verwendung, insbesondere als plastifizierte und vorteilhaft extrudierbare thermoplastische Formmassen zur Herstellung von Verbundglasfolien.

Weichmacherhaltige Polyvinylbutyral-Folien (PVB-Folien) sind bekannt sowie ihre Verwendung in Laminaten, insbesondere zur Herstellung von Verbundsicherheitsgläsern für den Automobil- und den Bausektor. Es ist weiterhin bekannt, daß das rheologische Verhalten von plastifizierten PVB-Massen sowohl bei der Extrusion als auch bei der Verbundherstellung von großer Bedeutung ist. Für eine optimale Extrusion wird ein Material benötigt, das bei den unter Extrusionsbedingungen vorkommenden Schergeschwindigkeiten [γ̊] im Bereich von γ̊ = 1 bis 1000 s⁻¹ eine möglichst geringe Viskosität aufweist, um eine Extrusion unter thermisch schonenden Bedingungen bei dennoch hohen Massendurchsätzen zu ermöglichen.

Bei der Verbundherstellung spielen ferner die plastische Verformbarkeit sowie die Fließfähigkeit der Verbundfolie eine große Rolle, insbesondere im Temperaturbereich von 60 °C bis 170 °C. Ist die Fließfähigkeit zu gering, so kommt es zu einer nicht ausreichenden Raumausfüllung innerhalb des Verbundes bis hin zum Einschluß von Luftblasen. Ist hingegen die Fließfähigkeit zu hoch, kommt es zum Ausfluß von Polymermaterial und zur Verunreinigung der Kanten des Verbundes, was zeitaufwendige Nacharbeitungen erforderlich machen kann. Zur Charakterisierung der Fließfähigkeit des plastifizierten Polymerisats unter Verbundbedingungen wird die Viskosität der Harzmasse im niedrigen Scherbereich (γ̊ = <1 s⁻¹) bestimmt. Aus dem geforderten Eigenschaftsspektrum erwächst hier häufig ein Optimierungskonflikt zwischen Extrudierbarkeit einerseits und Fließverhalten bei der Verbundherstellung andererseits.

Es wurde gefunden, daß man die aufgezeigten Schwierigkeiten und Nachteile insbesondere bei den Verbundfolien dadurch überwinden kann, daß man weichmacherhaltige Polyvinylacetale, die eine sehr hohe Strukturviskosität aufweisen, verwendet.

Strukturviskosität bei Polymeren bedeutet bekanntlich die Abnahme der Viskosität mit steigender Schergeschwindigkeit [γ̊]. Dabei hängt die Viskosität im niedrigen Scherbereich von dem gewichtsmittleren Molekulargewicht des polymeren Harzes ab und die Breite der Molekulargewichtsverteilung des polymeren Harzes bestimmt das Ausmaß der Strukturviskosität, so daß zur Erzielung einer hohen Strukturviskosität eine möglichst breite Molekulargewichtsverteilung vorteilhaft bzw. erwünscht ist.

Eine breite Molekulargewichtsverteilung kann durch verschiedene Methoden erzielt werden. So kann durch eine Abmischung verschiedener Polyvinylalkohol-(PVAL-)Typen bei der Polyvinylacetalherstellung eine entsprechend breite Verteilung in dem resultierenden Polyvinylacetalharz eingestellt werden.

Zur Herstellung einer ausreichend hohen Strukturviskosität sind aber so große Mengen niedermolekularer PVAL-Typen erforderlich, daß diese die Temperaturstabilität des Endproduktes herabsetzen und zu nicht mehr akzeptablen Gelbwerten der Verbundfolie führen.

US-A 2,332,895 beschreibt vernetzte Polyvinylacetale, die sich von vernetzten Polyvinylalkoholen ableiten, die durch Hydrolyse von Copolymerisaten aus Vinylestern und mehrfach ethylenisch ungesättigten copolymerisationsfähigen ungesättigten Ethern wie Diallylethern erhalten wurden. In US-A 2,332,898 werden als mehrfach ungesättigte Verbindungen in Polyvinylacetalen Alkydharze, wie Ethylenglykolmaleat oder -format verwendet. US-A 2,363,297 verwendet als mehrfach ungesättigte Verbindungen für vernetzte Polyvinylacetale Divinylarylmonomere. In allen Fällen werden die als.Ausgangsverbindungen für die Polyvinylacetale eingesetzten Polyvinylacetate als praktisch unlöslich in allen gebräuchlichen Lösemitteln beschrieben.

Überraschenderweise läßt sich nun aber eine ausreichende Strukturviskosität durch die Herstellung von niedrigvernetzten Polyvinylacetalharzen erzielen, wie man sie durch die Verwendung von niedrigvernetzten PVAL-Typen als Ausgangsprodukte für die Polyvinylacetalherstellung erhalten kann.

Gegenstand der Erfindung sind daher Polyvinylacetale mit verbessertem Schmelzviskositätsverhalten, hergestellt aus Polyvinyalkoholen und Aldehyden oder Aldehydacetalen unter Acetalisierungsbedingungen, dadurch gekennzeichnet, daß sie sich von niedrigvernetzten, löslichen Polyvinylacetalen ableiten, die durch Hydrolyse oder Alkoholyse von niedrigvernetzten, löslichen Copolymerisaten aus Vinylestern und 0,001 bis 5 Mol-%, bezogen auf die Gesamtmolmenge der eingesetzten copolymerisationsfähigen Monomeren, mehrfach ethylenisch ungesättigten copolymerisationsfähigen Acrylamiden oder Methacrylamiden erhalten und mit Aldehyden oder Aldehydacetalen unter Acetalisierungsbedingungen zu niedrigvernetzten, löslichen Polyvinylacetalen umgesetzt wurden.

Vernetzte Polyvinylacetal-Typen können auch durch Acetalisierung von unvernetztem PVAL unter Verwendung von bi- oder trifunktionellen Aldehyden erhalten werden (vgl. EP-OS 0 212 818 und US-PS-en 4 814 529, 4 874 814 und 4 902 464). Die so hergestellten Polyvinylacetalharze weisen jedoch einige entscheidende Nachteile auf. So kann es unter bestimmten ungünstigen Bedingungen, wie z. B. beim Auftreten eines Säuretiters in der Folie, zu einer Rückspaltung der Acetalbindungen und somit zum Verlust der Strukturviskosität kommen.

Bekanntlich ist das ökonomisch und ökologisch günstigste Herstellungsverfahren für Polyvinylacetale die Acetalisierung von wäßrigen PVAL-Lösungen. Dabei fällt das entstehende polymere Acetal alsbald aus und es erfolgt dessen weitere Acetalisierung sodann in heterogener Phase. Hierbei kann jedoch die Verwendung von mehrfachfunktionellen Aldehyden bzw. anderen mehrfachfunktionellen Vernetzern zu erhöhten lokalen Vernetzungsdichten führen, die in den aus den resultierenden Polyvinylacetalen hergestellten weichmacherhaltigen Folien eine Zunahme der Trübung bewirken und bei größerem Ausmaß der Vernetzung zu Polymerpartikeln führen, die vom Weichmacher nicht mehr aufgeschlossen werden können.

Neben den rheologischen Eigenschaften einer als Verbundfolie zu verwendenden weichmacherhaltigen Polyvinylacetalfolie spielen die mechanischen Eigenschaften der Verbundfolie eine wichtige Rolle. Es ist bekannt, daß eine hohe Energieabsorptionsfähigkeit der Verbundfolie auch eine gute Penetrationsfestigkeit von fertigen Glasverbunden bewirkt. Überraschenderweise wurde nun gefunden, daß plastifizierte niedrigvernetzte Polyvinylacetalfolien, die durch Acetalisierung von erfindungsgemäß niedrigvernetztem löslichem PVAL hergestellt wurden, bessere mechanische Eigenschaften aufweisen als vergleichbare unvernetzte Polvinylacetalfolien.

Die Herstellung von erfindungsgemäß niedrigvernetzten Polyvinylalkohlen (PVAL-nv) kann durch radikalisch initiierte Copolymerisation von Carbonsäurevinylestern mit copolymerisationsfähigen mehrfach ethylenisch ungesättigten Monomeren und anschließende Verseifung bzw. Umesterung der resultierenden niedrigvernetzten Copolymerisate erfolgen. Für die radikalische Copolymerisation vorzugsweise geeignet sind solche mehrfach ethylenisch ungesättigten Monomeren, die sowohl unter den alkalischen oder sauren Bedingungen der Hydrolyse und den sauren Bedingungen der Acetalisierung als auch unter den alkalischen Bedingungen der späteren Polyvinylacetalstabilisierung nicht hydrolysierbar sind. Solche Comonomeren sind insbesondere zweifach oder dreifach, ethylenisch ungesättigte Acryl- und Methacrylamide. Besonders bevorzugt ist die Verwendung von zweifach ethylenisch ungesättigten Verbindungen der Formel I, 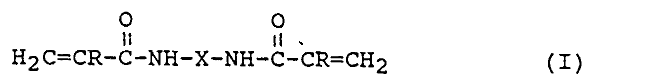 worin
- R =: -H, -CH₃
- X =: -(CHY)ₙ-,
- n =: 1 bis 10, vorzugsweise 2 bis 4,
- Y =: -H, -OH, vorzugsweise Y = -OH und n = 2,
bedeutet.

Besonders bevorzugt ist die Verwendung von Glyoxalbisacrylamid, wobei die freien Hydroxylgruppen an dem die beiden Acrylamideinheiten verbindenden Rest die Hydrophilie des Polyvinylalkohols und demzufolge die gute Wasserlöslichkeit auch des niedrigvernetzten Polyvinylalkohols stabilisieren bzw. gewährleisten.

Die bei der Copolymerisation eingesetzten Carbonsäurevinylester besitzen vorzugsweise 3 bis 20 C-Atome, besonders bevorzugt sind Vinylacetat und Vinylpropionat, insbesondere Vinylacetat. Gegebenenfalls werden bei der Copolymerisation weitere monoethylenisch ungesättigte Monomere, vorzugsweise z. B. solche aus der Gruppe Acryl- und Methacryl-amide, Acryl- und Methacryl-(C₁-C₄)ester, Acryl- und Methacryl-säure, N-Vinylpyrrolidon und dessen Derivate, mehrfachfunktionelle monoethylenisch ungesättigte Carbonsäuren, Carbonsäureester oder Carbonsäureanhydride, vorzugsweise z. B. aus der Gruppe Malein- und Itaconsäure, deren Ester, Halbester oder deren Anhydride, eingesetzt.

Die bei der Copolymerisation einzusetzende Menge an mehrfach ethylenisch ungesättigten copolymerisationsfähigen Monomeren, die auch Vernetzer genannt werden, hängt u. a. von deren Polarität und deren Copolymerisationsfähigkeit mit den Carbonsäurevinylestern ab. Die Menge ist dabei so zu wählen, daß die bei der Copolymerisation erhältlichen niedrigvernetzten copolymeren Polyvinylcarbonsäureester bzw. die nach Verseifung bzw. Umesterung der letzteren erhältlichen niedrigvernetzten Polyvinylalkohole ohne optische Trübung in geeigneten Lösungsmitteln löslich sind. Dies ist nur dann möglich, wenn die Mengen an copolymerisierenden Vernetzern in Bezug auf die eingesetzten Carbonsäurevinylester und demzufolge die Anzahl der Vernetzungsstellen in den Copolymeren ausreichend niedrig sind. Bevorzugt werden die Vernetzer daher in Mengen von 0,01 bis 1 Mol-%, bezogen auf die Gesamtmolmenge der eingesetzten copolymerisationsfähigen Monomeren, eingesetzt.

Als radikalbildende Initiatoren für die Polymerisation sind prinzipiell alle Radikalbildner, wie sie üblicherweise bei der Polymerisation von Carbonsäurevinylestern verwendet werden, einsetzbar, vorzugsweise anorganische und organische Peroxide, Percarbonate und Azoverbindungen. Besonders bevorzugt ist der Einsatz von Dibenzoylperoxid, Azobisisobutyronitril und tert. Butylperisooktoat.

Die Polymerisation kann in Suspension oder Emulsion oder in Lösung oder in Substanz durchgeführt werden, wobei die Polymerisation in Lösung bevorzugt ist. Als Lösungsmittel finden insbesondere Alkohole mit 1 bis 4 C-Atomen, Chloroform, Benzol, Toluol, Xylol, Tetrahydrofuran, Dioxan, vorzugsweise in Mengen bis zu 50 Gew.-%, insbesondere 5 bis 30 Gew.-%, bezogen auf die Gesamtmenge der eingesetzten Monomeren, Verwendung. Besonders bevorzugte Lösungsmittel sind Methanol und Ethanol.

Zur vorteilhaften Verkürzung der Polymerkettensegmente zwischen den Vernetzungsstellen in den resultierenden Makromolekülen können bei der Polymerisation auch übliche radikalkettenabbrechend wirkende Molekulargewichtsregler, sog. Radikalfänger, eingesetzt werden, z. B. Merkaptane, Aldehyde, Phenole oder Amine.

Die Synthese der Vinylestercopolymerisate ist nach allgemein bekannten Polymerisationsmethoden, beispielsweise nach dem Dosierverfahren oder auch als Batch-Reaktion möglich. Nicht umgesetzte Monomere, insbesondere nicht umgesetzte Carbonsäurevinylester, werden nach dem Reaktionsende vorzugweise aus dem Reaktionsansatz entfernt. Dies kann üblicherweise durch azeotrope Destillation der Restmonomeren unter Mitverwendung geeigneter azeotropbildender Lösungsmittel, vorzugsweise z. B. Methanol, erfolgen. Die Isolierung der erfindungsgemäß niedrigvernetzten copolymeren Polyvinylcarbonsäureester kann beispielsweise durch Abdestillieren des Lösungsmittels oder durch Fällung des Polymerisats aus dem Reaktionsgemisch durch Zusatz von geeigneten Fällungsmitteln erfolgen.

Die Verseifung bzw. Umesterung der erfindungsgemäß niedrigvernetzten copolymeren Polyvinylcarbonsäureester zu den entsprechenden teil- oder vollverseiften niedrigvernetzten Polyvinylalkoholen kann nach allgemein bekannten Verfahren, vorzugsweise in Lösung, unter Zusatz von Katalysatoren, z. B. sauren Katalysatoren wie anorganische oder organische Mineralsäuren, beispielsweise Salzsäure, Schwefelsäure, Phosphorsäure, Salpetersäure, Trifluoressigsäure oder p-Toluolsulfonsäure, erfolgen. Bevorzugt ist jedoch die Verwendung von basischen Katalysatoren, vorzugsweise Natronlauge, Kalilauge, Alkalialkoholate oder Amine.

Als Lösungsmittel für die Verseifung bzw. Umesterung werden insbesondere Alkohole mit 1 bis 4 C-Atomen, Halogenkohlenwasserstoffe, vorzugsweise Chloroform oder Methylenchlorid, Aromaten, vorzugsweise Toluol, Benzol und Xylole, Äther, vorzugsweise Diethyläther, Tetrahydrofuran oder Dioxan, eingesetzt. Besonders bevorzugt ist der Einsatz wassermischbarer Lösungsmittel, die gegebenenfalls in Kombination mit Wasser eingesetzt werden.

In Abhängigkeit von den Reaktionsbedingungen sind auf diesem Wege erfindungsgemäße niedrigvernetzte teil- oder vollverseifte Produkte erhältlich. Bevorzugt liegt der Hydrolysegrad der resultierenden niedrigvernetzten Polyvinylalkohle (PVAL-nv) zwischen 50 und 100 Mol-%, insbesondere 95 bis 99,9 Mol-%, bezogen auf die im unverseiften niedrigvernetzten copolymeren Ausgangspolyvinylcarbonsäureester enthaltenen hydrolysierbaren Monomereinheiten.

Vernetzte aber noch vollständig lösliche und nicht verseifte copolymere Polyvinylcarbonsäureester unterscheiden sich von unter gleichen Bedingungen hergestellten üblichen nicht vernetzten und nicht verseiften Polyvinylcarbonsäureestern durch erhöhte Viskosität ihrer Lösungen in organischen Lösungsmitteln. Zur Analyse sind hier allgemein bekannte Lösungsviskositätsmessmethoden, wie z. B. die Kapillarviskosimetrie oder andere, geeignet. Bei sehr geringen bis niedrigen Vernetzungsgraden versagen diese Methoden in der Praxis jedoch aufgrund ihrer zu geringen Empfindlichkeit. In solchen Fällen hat sich nun überraschenderweise aber die Ermittlung der sog. komplexen Viskosität mit Hilfe der Schwingungsrheometrie an geschmolzenen Polymerisatproben als geeignete differenzierende Analysenmethode erwiesen. Die erfindungsgemäß niedrigvernetzten copolymeren Polyvinylcarbonsäureester sind daher insbesondere nach dieser Methode charakterisierbar und zeichnen sich u.a. dadurch aus, daß sie bei schwingungsrheometrischen Untersuchungen ihrer Schmelzen bei 180 °C im Schwingungskreisfrequenzbereich von 10² bis 10⁻¹ rad/s beispielsweise eine ca. 1100 %-ige Zunahme ihrer komplexen Viskosität zeigen können, gegenüber einem vergleichbaren Wert von ca. 450 % bei unvernetztem Polyvinylacetat. Die schwingungsrheometrischen Untersuchungen wurden mit einem Schwingungsrheometer der Fa. Rheometrics, USA, in Abhängigkeit von der Schwingungskreisfrequenz [rad/s], auch Schwingkreisfrequenz genannt, durchgeführt.

Im Gegensatz zu den nicht verseiften niedrigvernetzten copolymeren Polyvinylcarbonsäureestern ist jedoch der Nachweis der Vernetzung bei den verseiften niedrigvernetzten copolymeren Polyvinylcarbonsäureestern, d. h. bei den durch die Verseifung erhältlichen niedrigvernetzten Polyvinylalkoholen (PVAL-nv), nur mit Hilfe üblicher lösungsviskosimetrischer Methoden möglich. Bekanntlich ist die Ermittlung der Schmelzviskosität an Polyvinylalkoholen als Analysenmethode generell nicht geeignet, da Polyvinylalkohole bei den erforderlichen Schmelztemperaturen Abbaureaktionen erleiden und Zersetzungserscheinungen zeigen.

Bei der Messung der komplexen Viskositäten von Polymerisatschmelzen in einem Schwingungsrheometer beschreibt der Viskositätsabfall mit steigender Schwingungskreisfrequenz (rad/s) das analoge Viskositätsverhalten der Polymerisatschmelzen unter entsprechenden Schergeschwindigkeiten [γ̊] (Cox-Merz Beziehung), d. h. ihren analogen Viskositätsabfall. Die Durchführung der Messungen bei verschiedenen Schwingkreisferquenzen mit dem Schwingungsrheometer der Firma Rheometrics (USA) erfolgte an Polymerisatschmelzen bei den jeweils angegebenen Temperaturen vorzugsweise bei
10⁻¹, 10⁰, 10¹ und 10² rad/s.

In gleicher Weise wie die erfindungsgemäß hergestellten niedrigvernetzten löslichen copolymeren Polyvinylcarbonsäureester lassen sich auch die daraus über die Stufe niedrigvernetzter löslicher Polyvinylalkohole hergestellten niedrigvernetzten löslichen Polyvinylacetale über ihre Polymerisatschmelzen charakterisieren, während die niedrigvernetzten löslichen Polyvinylalkohole der Zwischenstufe, wie vorstehend bereits erwähnt, sich nicht schwingungsrheometrisch messen lassen, da sie sich bei den erforderlichen Schmelztemperaturen zersetzen. Während bei nichtvernetzten löslichen Polyvinylestern und bei vergleichbaren niedrigvernetzten löslichen copolymeren Polyvinylestern die Lösungsviskosität mit steigenden Molekulargewichten in bekannter Weise vergleichbar ansteigt, sind deren komplexe Viskositäten überraschenderweise starkt divergierend. Die Polymerisatschmelzen der nichtvernetzten Polyvinylester zeigen bei steigender Schwingungskreisfrequenz im Temperaturbereich von 140 bis 240 °C einen relativ geringen Abfall ihrer komplexen Viskositätszahlen, während die niedrigvernetzten löslichen copolymeren Polyvinylesterschmelzen einen vergleichsweise sehr starken Abfall zeigen. So beträgt der Abfall im Meßbereich von 10⁻¹ bis 10² rad/s und einer Temperatur der Polymerisatschmelze von 180 °C z. B. bei einem nichtvernetzten Polyvinylacetat 4,5 : 1, während er bei einem vergleichbaren erfindungsgemäß niedrigvernetzten löslichen copolymeren Polyvinylacetat z. B. im Bereich von 12 : 1, liegt, was sich bei dem letzteren niedrigvernetzten Polymerisat überraschend vorteilhaft auf dessen Extrusionsverhalten auswirkt. In Abhängigkeit vom Molekulargewicht und der Anzahl der in niedrigvernetztem Polyvinylacetat vorhandenen Vernetzungsstellen kann der Abfall der komplexen Viskositätszahlen im Meßbereich von 10⁻¹ bis 10² rad/s bei einer Schmelzentemperatur von 180 °C Verhältniswerte von bis zu 50 : 1 annehmen, bevorzugt sind niedrigvernetzte Polyvinylacetate mit Verhältniswerten von 25 : 1 bis 6 : 1. Bei den Polyvinylacetalen verhalten sich die komplexen Viskositätszahlen bei den niedrigvernetzten Produkten vergleichsweise zu denen der nicht vernetzten Produkte ähnlich wie bei deren entsprechenden Ausgangspolyvinylestern. So beträgt der Abfall im Meßbereich von 10⁻¹ bis 10² rad/s und einer Temperatur der Polymerisatschmelze von 200 °C z. B. bei einem aus nichtvernetztem Polyvinylacetat hergestellten nichtvernetzten Polyvinylbutyral 4,5 : 1, während er bei einem aus erfindungsgemäß niedrigvernetztem löslichen copolymeren Polyvinylacetat hergestellten erfindungsgemäß niedrigvernetzten löslichen Polyvinylbutyral z. B. im Bereich von 11 : 1, liegt. In Abhängigkeit von dem bei der Acetalisierung eingesetzten niedrigvernetzten Polyvinylalkohol kann der Abfall der komplexen Viskositätszahlen im Meßbereich von 10⁻¹ bis 10² rad/s bei einer Schmelzentemperatur von 200 °C bis zu 48 : 1, vorzugsweise 6 : 1 bis 25 : 1, betragen.

Die erfindungsgemäß erhältlichen niedrigvernetzten Polyvinylalkohole (PVAL-nv) werden in organischen Lösungsmitteln oder aber vorzugsweise in wäßriger Lösung unter der katalytischen Wirkung von Säuren mit Aldehyden oder Aldehydacetalen zu Polyvinylacetalen umgesetzt. Hierbei ist es möglich, entweder die Säure zu Mischungen aus PVAL-nv-Suspensionen in organischen Lösungsmitteln oder zu wäßrigen Polyvinylalkohollösungen und Aldehyden, oder die Aldehydkomponente zu Mischungen aus PVAL-nv-Suspension oder PVAL-nv-Lösung und Säurekatalysator zu dosieren. Eintopfreaktionen sind ebenfalls durchführbar, führen aber häufig zu Verklumpungen bei dem resultierenden Polyvinylacetal.

Die erfindungsgemäß niedrigvernetzten Polyvinylalkohole können auch in Mischung mit nichtvernetzten Polyvinylalkoholen zur Acetalisierung eingesetzt werden. Dabei kann der Anteil an nichtvernetzten Polyvinylalkoholen vorzugsweise bis zu 80 Gew.-%, insbesondere 5 bis 40 Gew.-%, bezogen auf die Gesamtmenge des zu acetalisierenden Polyvinylalkohols, betragen. Die Polyvinylalkohole können auch einzeln acetalisiert und die Acetale danach miteinander vermischt werden.

Grundsätzlich sind für die Acetalisierung der erfindungsgemäß zu verwendenden niedrigvernetzten Polyvinylalkohole bzw. PVAL-Gemische alle bekannten Säurekatalysatoren und Aldehyde bzw. Aldehydacetale einsetzbar, die für die Herstellung bisher bekannter Polyvinylacetale verwendbar sind.

Bevorzugt werden für die Acetalisierung anorganische Säurekatalysatoren, wie z. B. Salzsäure, Phosphorsäure, Schwefelsäure, Salpetersäure, eingesetzt. Als Aldehyde lassen sich lineare und/oder verzweigte aliphatische und/oder cycloaliphatische und/oder aromatische Aldehyde einsetzen, bevorzugt sind hier solche mit 1 bis 20 C-Atomen, wie z. B. Benzaldehyd, Formaldehyd, Acetaldehyd, Propionaldehyd, Butyraldehyd und Isononanaldehyd sowie gegebenenfalls Derivate dieser Verbindungen; besonders bevorzugt ist die Verwendung von Butyraldehyd. Der Einsatz von Hydroxyaldehyden kann in Einzelfällen vorteilhaft sein. Auch Gemische aus den aufgeführten Aldehyden sind zur Acetalisierung einsetzbar und können in manchen Fällen zu vorteilhaften Ergebnissen führen. Vorteilhaft wirkt sich die Mitverwendung von tensioaktiven Substanzen oder von Emulgatoren, vorzugsweise von tensioaktiven Säuren, die gleichzeitig auch als Säurekatalysatoren wirken können, wie z. B. (C₈-C₂₀)-Alkansulfonsäuren, fluorierte langkettige Fettsäuren bzw. Sulfonsäuren, langkettige Alkylsulfosuccinatester, auf den Acetalisierungsverlauf aus. Darüber hinaus sind auch Gemische aus tensioaktiven Substanzen oder aus Emulgatoren einsetzbar.

Zur Herstellung von erfindungsgemäß niedrigvernetzten Polyvinylacetalen werden erfindungsgemäße, niedrigvernetzte Polyvinylalkohole der oben aufgeführten Art bzw. deren Mischungen bzw. deren Mischungen mit anderen Polyvinylalkoholen in Wasser, vorzugsweise in der Wärme, gelöst, wobei die Konzentration der Polymerisatlösung vorzugsweise zwischen 1 und 50 Gew.-%, insbesondere zwischen 5 und 20 Gew.-%, bezogen auf die PVAL-Lösung, betragen kann. Anschließend werden die Polyvinylalkohole der aufgeführten Art nach üblichen Methoden acetalisiert, vorzugsweise z. B. durch Zudosieren der Säure zur aldehydhaltigen Polyvinylalkohol-Lösung. Die Säure wird hierbei bevorzugt innerhalb von 5 bis 300 Minuten zudosiert, wobei starkes Rühren vorteilhaft ist. Die Reaktion ist aber auch als Batch-Reaktion durchführbar. Die Menge des zuzusetzenden Aldehyds richtet sich nach dem angestrebten Acetalisierungsgrad und dem daraus errechenbaren stöchiometrischen Bedarf. Aufgrund des bekanntermaßen meist nicht vollständigen Aldehydumsatzes wird bevorzugt mit Aldehydüberschuß gearbeitet. Besonders bevorzugt wird der Aldehyd in bis zu 40 mol-%igem, insbesondere 10 bis 20 mol-%igem, Überschuß verwendet. In einer besonders bevorzugten Verfahrensvariante wird die Acetalisierung in der wäßrigen Ausgangs-Polyvinylalkohol-Aldehyd-Lösung bei Temperaturen von 10 bis 20 °C in Gang gesetzt, wonach sich das gebildete Polyvinylacetal alsbald meist pulverförmig abscheidet. Zur Vervollständigung der Reaktion wird das Reaktionsgemisch langsam auf Raumtemperatur erwärmt,und es wird gegebenenfalls eine ca. 1 bis 5 Stunden dauernde Nachreaktion bei höheren Temperaturen, z. B. bei 25 °C bis 80 °C, angeschlossen. Gegebenenfalls wird die Umsetzung unter Emulgatorzusatz durchgeführt, wobei der Emulgator, vorzugsweise eine tensioaktive Sulfonsäure, entweder der Ausgangslösung, oder während des Reaktionsverlaufs und/oder bei der Nachreaktion zugesetzt werden kann. Die zu verwendende Menge Säurekatalysator richtet sich u. a. nach dem angestrebten Acetalisierungsgrad und kann vorzugsweise bis zu 1,1 val, bezogen auf den molaren Vinylalkoholeinheitengehalt, betragen.

Das gebildete und vorzugsweise wasserunlösliche Polyvinylacetal, das sich vorzugsweise in Pulverform aus der wäßrigen Reaktionslösung abscheidet, wird von der flüssigen Phase abgesaugt, mit schwach alkalisch eingestelltem Wasser (pH 9 bis 12) gewaschen und getrocknet.

Eine weitgehend vollständige Neutralisation des Säurekatalysators kann durch eine Nachbehandlung des Polymerpulvers in Alkalilauge erzielt werden. Dazu wird eine wäßrige Polymersuspension für ca. 1 bis 4 Stunden im pH-Bereich von 9 bis 13 auf 40 bis 90 °C erhitzt, an-schließend erneut abgesaugt, mit Wasser gewaschen und getrocknet.

Grundsätzlich ist die Herstellung aller erfindungsgemäßen Polyvinylacetale auch in organischen Lösungsmitteln durchführbar. Mit den in organischen Lösungsmitteln nicht löslichen Polyvinylalkoholen kann sie als Zwei- bzw. Mehrphasenreaktion durchgeführt werden. Durch Zusatz von Wasser zu wasserlöslichen bzw. wasserverdünnbaren Lösungsmitteln kann auch eine Einphasenreaktion erreicht werden.

Als Lösungsmittel eignen sich z. B. Xylole, Toluol, Chloroform, Methylenchlorid, besonders jedoch mit Wasser mischbare Lösungsmittel, insbesondere wasserlösliche Alkohole, vorzugsweise Ethanol und Methanol.

Zur Herstellung der erfindungsgemäßen niedrigvernetzten Polyvinylacetale in organischen Lösungsmitteln werden der Säurekatalysator, der Aldehyd und der PVAL-nv in dem organischen Lösungsmittel aufgeschlämmt bzw. suspendiert bzw. dispergiert oder gelöst und das Gemisch unter Rückfluß erhitzt. Gegebenenfalls kann der Aldehyd auch während des Reaktionsverlaufs zudosiert werden. Die in dem organischen Lösungsmittel unlöslichen Polyvinylalkohole gehen dabei mit fortschreitender Acetalisierung in Lösung.

Als Aldehyde sind vorzugsweise lineare und/oder verzweigte aliphatische und/oder cycloaliphatische und/oder aromatische Aldehyde einsetzbar. Besonders bevorzugt werden Aldehyde mit 1 bis 20 C-Atomen, wie z. B. Benzaldehyd, Formaldehyd, Acetaldehyd, Propionaldehyd, Butyraldehyd und Isononanaldehyd, ganz besonders aber Butyraldehyd, eingesetzt. Ferner kann der zusätzliche Einsatz von hydroxylgruppenhaltigen Aldehyden von Vorteil sein. Nach Beendigung der Acetalisierungsreaktion wird das Reaktionsprodukt durch Zusatz von unpolaren Lösungsmitteln, wie z. B. Pentan, Hexan, Heptan u. a. zu der Reaktionslösung oder durch Eingießen der Reaktionslösung in eiskaltes Wasser bzw. eiskaltes Wasser-Alkohol-Gemisch ausgefällt, von der flüssigen Phase abgesaugt, mit schwach alkalisch eingestelltem Wasser (pH 9 bis 12) gewaschen und getrocknet. Alternativ kann das Produkt auch durch Abdestillieren des Lösungsmittels isoliert werden.

Die erfindungsgemäß herstellbaren niedrigvernetzten Polyvinylacetale werden vorzugsweise solchermaßen acetalisiert, daß sie nach der Acetalisierung einen Gehalt an nicht acetalisierten Vinylalkoholeinheiten von 15 bis 28 Gew.-%, insbesondere 18 bis 24 Gew.-%, aufweisen.

Gegenstand der Erfindung ist daher ferner ein Verfahren zur Herstellung von Polyvinylacetalen mit verbessertem Schmelzviskositätsverhalten durch Acetalisierung von niedrigvernetzten, löslichen Polyvinylalkoholen, dadurch gekennzeichnet, daß man zunächst ein niedrigvernetztes, lösliches Copolymerisat aus Vinylester und (v.S.4) mehrfach ethylenisch ungesättigten copolymerisatonsfähigen (v.S.4) durch radikalisch initiierte Copolymerisation des Vinylesters mit dem mehrfach ethylenisch ungesättigten Monomeren herstellt und das resultierende Copolymerisat anschließend durch Hydrolyse oder Alkoholyse in einen niedrigvernetzten löslichen Polyvinylalkohol überführt, diesen durch Umsetzung mit Aldehyden oder Aldehydacetalen unter Acetalisierungsbedingungen in ein niedrigvernetztes lösliches Polyvinylacetal umwandelt und das niedrigvernetzte lösliche Polyvinylacetal isoliert und gegebenenfalls unter Weichmacherzusatz plastifiziert.

Die erfindungsgemäßen niedrigvernetzten Polyvinylacetale eignen sich in Abmischung mit Weichmachern und Plastifizierung insbesondere zur Herstellung von Folien durch thermoplastische Verformung, wobei die Verwendung dieser Folien zur Herstellung von Verbundwerkstoffen, insbesondere von Verbundgläsern, ganz besonders bevorzugt ist. Als Weichmacher einsetzbar sind hierbei grundsätzlich alle für die handelsüblichen Polyvinylacetale einsetzbaren Weichmacher, vorzugsweise z. B. Carbonsäureester des Triethylenglykols, sowie Adipinsäure-, Phthalsäure- und Phosphorsäure-ester von n- oder iso-(C₂-C₁₀)-Alkanolen. Besonders bevorzugt sind 2-Ethylbuttersäure- und n-Heptansäureester des Triethylenglykols sowie Di-n-hexyladipat.

Darüber hinaus sind die erfindungsgemäß niedrigvernetzten Polyvinylacetale auch mit handelsüblichen unvernetzten Polyvinylacetalen mischbar, vorzugsweise im Gewichtsverhältnis von 99 : 1 bis 1 : 99, insbesondere 95 : 5 bis 5 : 95, besonders bevorzugt 80 : 20 bis 20 : 80. Mischungen dieser Art können nach Plastifizierung ebenfalls thermoplastisch zu Folien verarbeitet werden, die sich wiederum vorzugsweise zur Herstellung von Verbundgläsern einsetzen lassen.

Die Weichmacher werden in den üblichen Mengen eingesetzt, d. h. die Polymerisat/Weichmachergemische können vorzugsweise z. B. 20 bis 50 Gew.-%, insbesondere 23 bis 35 Gew.-%, Weichmacher enthalten.

Die erfindungsgemäße plastifizierte Polyvinylacetalextrusionsformmasse wird insbesondere thermoplastisch zu Folien verarbeitet, wobei sie vorzugsweise durch eine Breitschlitzdüse zu einer 0,2 bis 2 mm dicken Folie extrudiert wird. Dabei liegt die Extrusionstemperatur im üblichen Bereich, vorzugsweise z. B. zwischen 140 und 240 °C, wobei kurzzeitig auch höhere Temperaturen erreicht werden können. Die Folienformmasse kann die üblichen Zusätze enthalten, wie z. B. geringe Mengen an Alkali, z. B. 0,001 bis 0,1 Gew.-%, bezogen auf die Formmasse, Alkalihydroxid oder alkalisch reagierendes Alkalimetallsalz, ferner die bekannten Antihaftmittel, wie z. B. Salze von Carbonsäuren, insbesondere Kalium- und Magnesiumsalze der Ameisensäure bzw. der Essigsäure oder Salze von Dicarbonsäuren, sowie bestimmte Silane bzw. Siloxane. Die Konzentration an diesen Antihaftmitteln liegt vorzugsweise z. B. zwischen 0,001 und 0,2 Gew.-%, bezogen auf die Formmasse.

Darüber hinaus lassen sich die erfindungsmäßen niedrigvernetzten Polyvinylacetale aufgrund ihrer guten Haftungsfähigkeit auf diversen Materialien, insbesondere auf Glas und auf Metallen, vielseitig als Beschichtungsmassen verwenden. Außerdem können sie auf zahlreichen Anwendungsgebieten eingesetzt werden, auf denen üblicherweise Polyvinylacetale bisher bekannter Art Verwendung finden, insbesondere als Bindemittel für Pigmente, zur Herstellung von Druckfarben, Korrosionsschutzlacken, lichtempfindlichen Schichten, Schmelzklebern und lösungsmittelhaltigen Klebstoffen sowie als Bindemittel für Keramikpulver. Je nach Anwendungen können die erfindungsgemäßen niedrigvernetzten Polyvinylacetale mit verschiedenen bekannten Zusatzstoffen versehen werden, wie z. B. Pigmenten, Farbstoffen, Weichmachern und Stabilisatoren. Als Stabilisatoren eignen sich die bekannten phenolischen Stabilisitoren, wie z. B. 2,4-Di-tert.butyl-p-kresol, Phosphite, wie z. B. Trisnonylphenylphosphit, u. a.. In vielen Fällen kann der Zusatz dieser Substanzen vor, während oder nach der Herstellung der erfindungsgemäßen Polymerisate erfolgen.

Die erfindungsgemäß hergestellten niedrigvernetzten Extrusionsformmassen weisen gegenüber unvernetzten Extrusionsformmassen eine erhöhte Strukturviskosität auf. Die sich daraus bei den ersteren ergebende niedrigere Extrusionsviskosität führt aber dennoch zu einer Verbundfolie, die in der praktischen Anwendung unter Verbundbedingungen keine zu hohe bzw. keine nachteilige Fließfähigkeit aufweist. Durch Verwendung verschiedener niedrigvernetzter Polyvinylacetale kann das Ausmaß der Strukturviskosität vorteilhaft auf das jeweilige Anwendungsproblem abgestimmt werden.

Die mechanischen Eigenschaften der niedrigvernetzten plastifizierten Polyvinylacetale unterscheiden sich deutlich vorteilhaft von denen unvernetzter plastifizierter Polyvinylacetale, wie u. a. insbesondere den Werten für entsprechende Polyvinylbutyrale PVBu-nv und PVBu in der nachstehenden Tabelle 4 entnommen werden kann. Das verbesserte Energieaufnahmevermögen von erfindungsgemäßen weichmacherhaltigen Verbundfolien führt insbesondere zu höheren Penetrationsfestigkeiten bei den fertigen Glasverbunden.

Die Erfindung wird durch die nachfolgenden Beispiele näher erläutert.

### A) Herstellung von Polyvinylacetat

### VERGLEICHSBEISPIEL 1

### Herstellung von unvernetztem Polyvinylacetat (PVAC)

In einem Reaktionsgefäß werden unter Stickstoffatmosphäre 3000 g Vinylacetat, 750 g Methanol und 0,6 g Azobisisobutyronitril während 3 Stunden am Rückfluß erhitzt. Anschließend wird der nicht umgesetzte Restmonomerenanteil unter Vakuum azeotrop abdestilliert und das resultierende PVAC in fester Form gewonnen.

Die Kenndaten des Produktes sind in der Tab. 1 zusammengefaßt wiedergegeben.

### BEISPIEL 1

### Herstellung von niedrigvernetztem Polyvinylacetat (PVAC-nv)

Ausführung des Polymerisationsverfahrens wie in dem Vergleichsbeispiel 1 beschrieben mit der Abänderung, daß dem Reaktionsgemisch vor dem Erhitzen 3 g Glyoxalbisacrylamid zugesetzt werden. Das resultierende PVAC-nv wird in fester Form gewonnen.
Die Kenndaten des Produktes sind in der Tab. 1 zusammengefaßt wiedergegeben.

### VERGLEICHSBEISPIEL 2

### Herstellung von unvernetztem Polyvinylacetat (PVAC)

In einem Reaktionsgefäß werden unter Stickstoffatmosphäre 3000 g Vinylacetat, 750 g Methanol und 1,5 g Azobisisobutyronitril während 145 Minuten am Rückfluß erhitzt. Anschließend wird der nicht umgesetzte Restmonomerenanteil unter Vakuum azeotrop abdestilliert und das resultierende PVAC in fester Form gewonnen.
Die Kenndaten des Produktes sind in der Tab. 1 zusammengefaßt wiedergegeben.

### BEISPIEL 2

### Herstellung von niedrigvernetztem Polyvinylacetat (PVAC-nv)

Ausführung des Polymerisationsverfahrens wie in dem Vergleichsbeispiel 2 beschrieben mit der Abänderung, daß dem Reaktionsgemisch vor dem Erhitzen 1 g Glyoxalbisacrylamid zugesetzt werden. Das resultierende PVAC-nv wird in fester Form gewonnen.
Die Kenndaten des Produktes sind in der Tab. 1 zusammengefaßt wiedergegeben.

### VERGLEICHSBEISPIEL 3

### Herstellung von unvernetztem Polyvinylacetat (PVAC)

In einem Reaktionsgefäß werden unter Stickstoffatmosphäre 3000 g Vinylacetat, 1300 g Methanol und 1,5 g Azobisisobutyronitril während 180 Minuten am Rückfluß erhitzt. Anschließend wird der nicht umgesetzte Restmonomerenanteil unter Vakuum azeotrop abdestilliert und das resultierende PVAC in fester Form gewonnen.
Die Kenndaten des Produktes sind in der Tab. 1 zusammengefaßt wiedergegeben.

### BEISPIEL 3

### Herstellung von niedrigvernetztem Polyvinylacetat (PVAC-nv)

Ausführung des Polymerisationsverfahrens wie in dem Vergleichsbeispiel 3 beschrieben mit der Abänderung, daß dem Reaktionsgemisch vor dem Erhitzen 3 g Glyoxalbisacrylamid zugesetzt werden. Das resultierende PVAC-nv wird in fester Form gewonnen.
Die Kenndaten des Produktes sind in der Tab. 1 zusammengefaßt wiedergegeben.

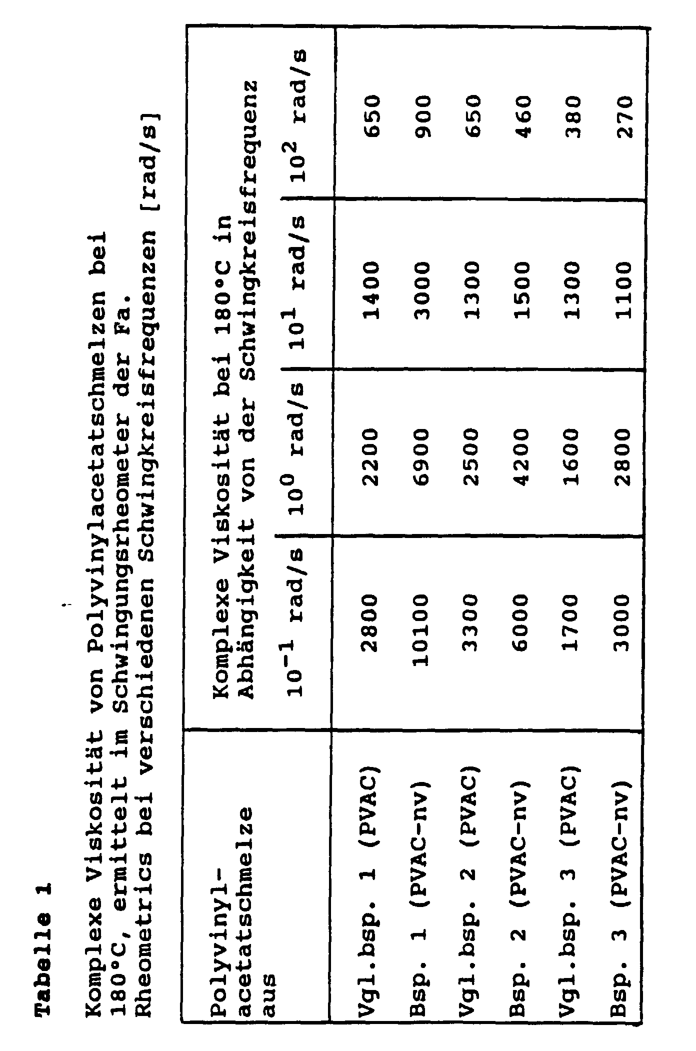

### B) Herstellung von Polyvinylalkohol

### VERGLEICHSBEISPIEL 4

### Herstellung von unvernetztem Polyvinylalkohol (PVAL)

1000 g Polyvinylacetat aus Vergleichsbeispiel 1 werden in 5667 g Methanol gelöst und die Lösung bei Raumtemperatur mit 150 g 10 gew.-%iger methanolischer NaOH versetzt. Nach ca. 29 Minuten bildet sich ein Gel, welches in ein methanolfeuchtes Granulat zerteilt wird. Nach 2 Stunden wird das Gelgranulat abgesaugt, in 3000 g Methanol aufgeschlämmt, mit 150 g 10 gew.-%iger methanolischer NaOH versetzt und 1 Stunde am Rückfluß erhitzt. Nach dem Abkühlen wird die Reaktionsmischung mit Eisessig neutralisiert. Der als feinteiliges Produkt erhaltene unvernetzte PVAL wird abgesaugt, mehrmals mit Methanol gewaschen und im Vakuum bei 50 °C getrocknet.
Die Kenndaten des Produktes sind in der Tab. 2 zusammengefaßt wiedergegeben.

### BEISPIEL 4

### Herstellung von niedrigvernetztem Polyvinylalkohol (PVAL-nv)

Ausführung des Hydrolyseverfahrens wie in dem Vergleichsbeispiel 4 beschrieben mit der Abänderung, daß anstelle von 1000 g unvernetztem PVAC aus Vergleichsbeispiel 1 nun 1000 g niedrigvernetztes PVAC-nv aus Beispiel 1 eingesetzt werden. Der resultierende niedrigvernetzte PVAL-nv wird in fester, feinteiliger Form gewonnen.
Die Kenndaten des Produktes sind in der Tab. 2 zusammengefaßt wiedergegeben.

### VERGLEICHSBEISPIEL 5

### Herstellung von unvernetztem Polyvinylalkohol (PVAL)

Ausführung des Hydrolyseverfahrens wie in dem Vergleichsbeispiel 4 beschrieben mit der Abänderung, daß anstelle von 1000 g unvernetztem PVAC aus Vergleichsbeispiel 1 nun 1000 g unvernetztes PVAC aus Vergleichsbeispiel 2 eingesetzt werden. Der resultierende unvernetzte PVAL wird in fester, feinteiliger Form gewonnen.
Die Kenndaten des Produktes sind in der Tab. 2 zusammengefaßt wiedergegeben.

### BEISPIEL 5

### Herstellung von niedrigvernetztem Polyvinylalkohol (PVAL-nv)

Ausführung des Hydrolyseverfahrens wie in dem Vergleichsbeispiel 4 beschrieben mit der Abänderung, daß anstelle von 1000 g unvernetztem PVAC aus Vergleichsbeispiel 1 nun 1000 g niedrigvernetztes PVAC-nv aus Beispiel 2 eingesetzt werden. Der resultierende niedrigvernetzte PVAL-nv wird in fester, feinteiliger Form gewonnen.
Die Kenndaten des Produktes sind in der Tab. 2 zusammengefaßt wiedergegeben.

### VERGLEICHSBEISPIEL 6

### Herstellung von unvernetztem Polyvinylalkohol (PVAL)

Ausführung des Hydrolyseverfahrens wie in dem Vergleichsbeispiel 4 beschrieben mit der Abänderung, daß anstelle von 1000 g unvernetztem PVAC aus Vergleichsbeispiel 1 nun 1000 g unvernetztes PVAC aus Vergleichsbeispiel 3 eingesetzt werden. Der resultierende unvernetzte PVAL wird in fester, feinteiliger Form gewonnen.
Die Kenndaten des Produktes sind in der Tab. 2 zusammengefaßt wiedergegeben.

### BEISPIEL 6

### Herstellung von niedrigvernetztem Polyvinylalkohol (PVAL-nv)

Ausführung des Hydrolyseverfahrens wie in dem Vergleichsbeispiel 4 beschrieben mit der Abänderung, daß anstelle von 1000 g unvernetztem PVAC aus Vergleichsbeispiel 1 nun 1000 g niedrigvernetztes PVAC-nv aus Beispiel 3 eingesetzt werden. Der resultierende niedrigvernetzte PVAL-nv wird in fester, feinteiliger Form gewonnen.
Die Kenndaten des Produktes sind in der Tab. 2 zusammengefaßt wiedergegeben.

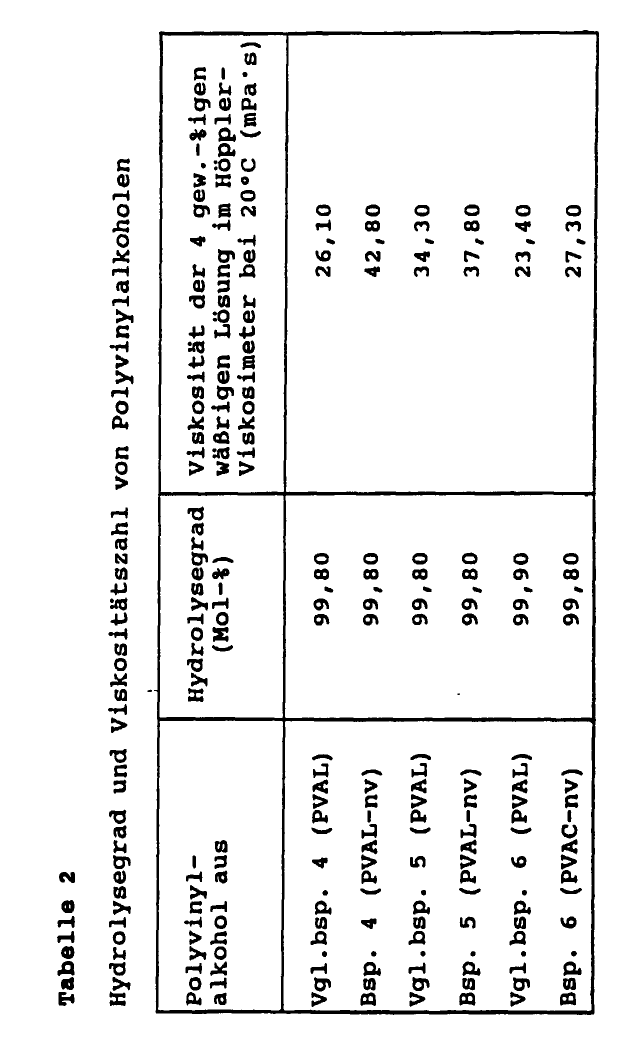

### C) Herstellung von Polyvinylbutyral

### VERGLEICHSBEISPIEL 7

### Herstellung von unvernetztem Polyvinylbutyral (PVBu)

540 g unvernetzter Polyvinylalkohol (PVAL) aus Vergleichsbeispiel 4 werden in 7170 g Wasser gelöst, die Lösung auf 16 °C abgekühlt und mit 309 g Butyraldehyd vermischt. Unter Rühren werden innerhalb von 2 Stunden 800 ml einer 20 gew.-%igen wäßrigen HCl-Lösung zugetropft und das Gemisch dabei auf 55 °C erwärmt. Das Reaktionsgemisch wird unter Rühren weitere 3 Stunden bei 55 °C gehalten und die Reaktion vervollständigt. Das feinteilig ausgefallene unvernetzte Polyvinylbutyral (PVBu) wird mit vollentsalztem Wasser gewaschen, danach in 8 l einer verdünnten wäßrigen NaOH-Lösung mit einem pH-Wert von 11 suspendiert und 2 Stunden auf 70 °C erwärmt. Nach erneutem Auswaschen mit vollentsalztem Wasser erfolgt die Trockung im Umlufttrockenschrank. Man erhält ein Polyvinylbutyralpulver mit einem Gehalt an Polyvinylalkoholeinheiten von 21 Gew.-%.
Das Polymerisat wird mit 26 Gew.-%, bezogen auf das Gesamtgewicht der Extrusionsmasse, Triethylenglykoldi-n-heptanoat als Weichmacher zu einer Extrusionsmasse geliert und mittels eines Haake-Doppelschneckenextruders mit Breitschlitzdüse zu einer 0,8 mm dicken Flachfolie extrudiert (Massetemperatur 160 °C).
Die Eigenschaften dieser Weichfolie sind in den Tabellen 3 und 4 zusammengefaßt wiedergegeben.

### BEISPIEL 7

### Herstellung von niedrigvernetztem Polyvinylbutyral (PVBu-nv)

Ausführung des Acetalisierungsverfahrens wie in dem Vergleichsbeispiel 7 beschrieben mit der Abänderung, daß anstelle von 540 g unvernetztem PVAL aus Vergleichsbeispiel 4 nun 540 g niedrigvernetzter PVAL-nv aus Beispiel 6 eingesetzt werden. Das resultierende niedrigvernetzte Polyvinylbutyralpulver enthält 20,8 Gew.-% Polyvinylalkoholeinheiten.
Die Eigenschaften der analog zu Vergleichsbeispiel 7 hergestellten Weichfolie sind in den Tabellen 3 und 4 zusammengefaßt wiedergegeben.

### VERGLEICHSBEISPIEL 8

### Herstellung von unvernetztem Polyvinylbutyral (PVBu)

Ausführung des Acetalisierungsverfahrens wie in dem Vergleichsbeispiel 7 beschrieben mit der Abänderung, daß anstelle von 540 g unvernetztem PVAL aus Vergleichsbeispiel 4 nun 378 g unvernetzter PVAL aus Vergleichsbeispiel 5 und 162 g handelsüblicher unvernetzter PVAL ( ^{R} Mowiol 20-98 der Fa. Hoechst AG) sowie anstelle von 309 g nun 312,6 g Butyraldehyd eingesetzt werden. Das in Pulverform erhaltene unvernetzte PVBu enthält 20,1 Gew.-% Polyvinylalkoholeinheiten. Zur Herstellung einer Weichfolie wird das PVBu mit 26 Gew.-% Dihexyladipat, anstelle von Triethylenglykol-di-n-heptanoat, geliert und zu einer 0,8 mm dicken Flachfolie extrudiert.
Die Eigenschaften dieser Folie sind in den Tabellen 3 und 4 zusammengefaßt wiedergegeben. Das als Ausgangs-PVAL eingesetzte Mowiol 20-98 besitzt einen Hydrolysegrad von 98 Mol-% und die Viskosität seiner 4 gew.-%igen wäßrigen Lösung im Höpplerviskosimeter bei 20 °C beträgt 20 Centipoise.

### BEISPIEL 8

### Herstellung von niedrigvernetztem Polyvinylbutyral (PVBu-nv)

Ausführung des Acetalisierungsverfahrens und der Folienextrusion wie in dem Vergleichsbeispiel 8 beschrieben mit der Abänderung, daß anstelle von 378 g unvernetztem PVAL aus Vergleichsbeispiel 5 nun 378 g niedrigvernetzter PVAL-nv aus Beispiel 5 eingesetzt werden.
Die Eigenschaften der erhaltenen Weichfolie sind in den Tabellen 3 und 4 zusammengefaßt wiedergegeben.

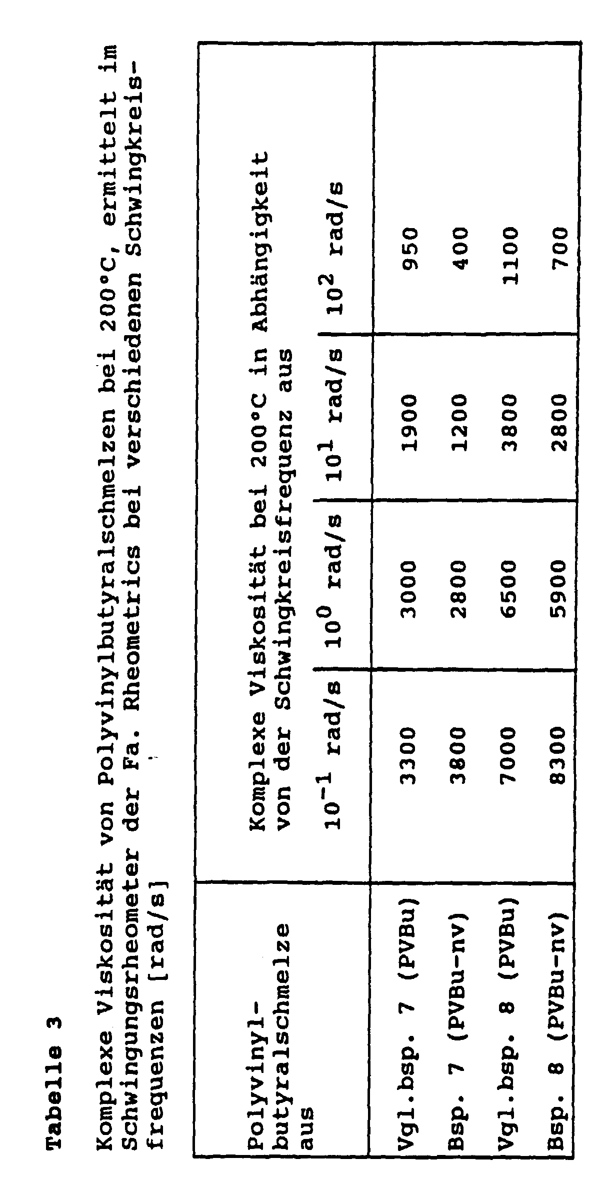

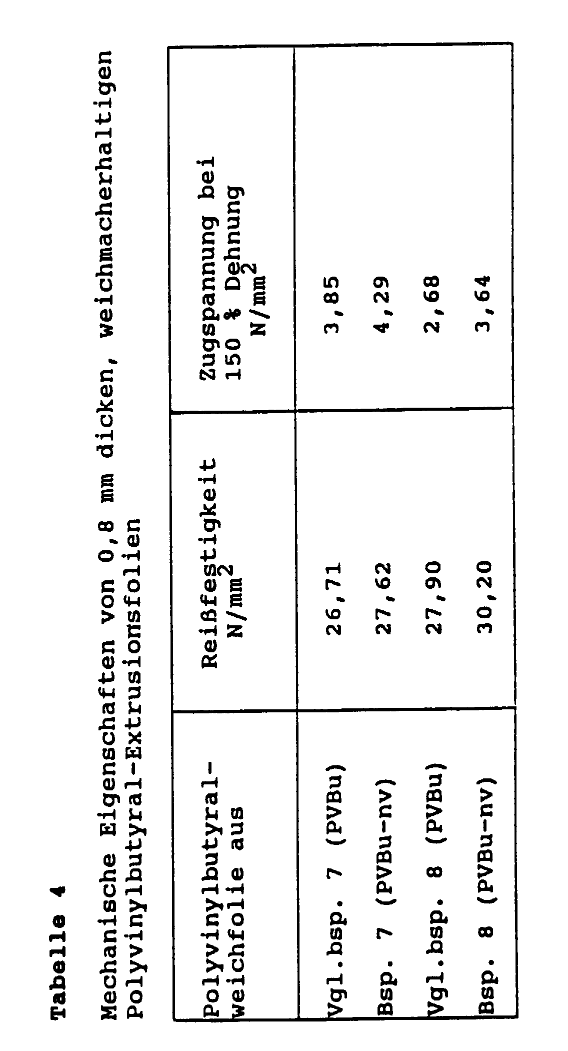

## Patentansprüche (Patentansprüche für folgende(n) Vertragsstaat(en): AT, BE, CH, DE, FR, GB, IT, LI, NL, PT, SE)

1. Polyvinylacetale mit verbessertem Schmelzviskositätsverhalten, hergestellt aus Polyvinylalkoholen und Aldehyden oder Aldehydacetalen unter Acetalisierungsbedingungen, dadurch gekennzeichnet, daß sie sich von niedrigvernetzten, löslichen Polyvinylalkoholen ableiten, die durch Hydrolyse oder Alkoholyse von niedrigvernetzten, löslichen Copolymerisaten aus Vinylestern und 0,001 bis 5 Mol-%, bezogen auf die Gesamtmolmenge der eingesetzten copolymerisationsfähigen Monomeren, mehrfach ethylenisch ungesättigten copolymerisationsfähigen Acrylamiden oder Methacrylamiden erhalten und mit Aldehyden oder Aldehydacetalen unter Acetalisierungsbedingungen zu niedrigvernetzten, löslichen Polyvinylacetalen umgesetzt wurden.

2. Polyvinylacetale nach Anspruch 1, dadurch gekennzeichnet, daß die Ausgangscopolymerisate aus Vinylestern und mehrfach ethylenisch ungesättigten copolymerisationsfähigen Monomeren copolymerisierte Monomereinheiten aus Verbindungen der Formel I, 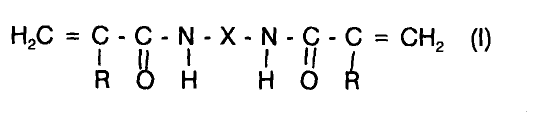 worin
R = H, -CH₃,
X = -(CHY)ₙ-, n = 1 bis 10, vorzugsweise 2 bis 4,
Y = H, -OH, vorzugsweise Y = -OH und n = 2,
bedeutet, enthalten.

3. Polyvinylacetale nach einem oder mehreren der Ansprüche 1 und 2, dadurch gekennzeichnet, daß die Ausgangscopolymerisate als copolymerisierte Monomereinheiten Glyoxalbisacrylamid enthalten.

4. Polyvinylacetale nach einem oder mehreren der Ansprüche 1 bis 3, dadurch gekennzeichnet, daß die Ausgangscopolymerisate 0,01 bis 1 Mol-%, bezogen auf die Gesamtmolmenge der eingesetzten copolymerisationsfähigen Monomeren, Monomereinheiten aus mehrfach ethylenisch ungesättigten copolymerisationsfähigen Monomeren enthalten.

5. Polyvinylacetale nach einem oder mehreren der Ansprüche 1 bis 4, dadurch gekennzeichnet, daß die Ausgangscopolymerisate als Vinylestermonomereinheiten copolymerisierte Carbonsäurevinylester mit 3 bis 20 C-Atomen, vorzugsweise Vinylacetat oder Vinylpropionat, insbesondere Vinylacetat, und gegebenenfalls weitere monoethylenisch ungesättigte Comonomere enthalten.

6. Polyvinylacetale nach einem oder mehreren der Ansprüche 1 bis 5, dadurch gekennzeichnet, daß die niedrigvernetzten löslichen Ausgangspolyvinylalkohole Hydrolysegrade von 50 bis 100 Mol-%, vorzugsweise 95 bis 99,9 Mol-%, aufweisen.

7. Polyvinylacetale nach einem oder mehreren der Ansprüche 1 bis 6, dadurch gekennzeichnet, daß ihre Acetalisierung unter Verwendung von aliphatischen, cycloaliphatischen oder aromatischen Aldehyden mit 1 bis 20 C-Atomen, vorzugsweise Butyraldehyd, erfolgte.

8. Polyvinylacetale nach einem oder mehreren der Ansprüche 1 bis 7, dadurch gekennzeichnet, daß ihr Gehalt an nicht acetalisierten Vinylalkoholeinheiten 15 bis 28 Gew.-%, vorzugsweise 18 bis 24 Gew.-%, bezogen auf das Polyvinylacetal, beträgt.

9. Polyvinylacetale nach einem oder mehreren der Ansprüche 1 bis 8, dadurch gekennzeichnet , daß für die Acetalisierungsreaktion Gemische aus niedrigvernetzten löslichen Polyvinylalkoholen und unvernetzten löslichen Polyvinylalkoholen eingesetzt wurden oder diese Polyvinylalkohole einzeln acetalisiert und danach miteinander vermischt wurden.

10. Polyvinylacetale nach einem oder mehreren der Ansprüche 1 bis 9, dadurch gekennzeichnet, daß die Schmelzen der niedrigvernetzten, löslichen Ausgangsvinylestercopolymerisate bei 180 °C und einer Schwingkreisfrequenz von 10⁻¹ rad/s eine erhöhte komplexe Viskosität, vergleichsweise zu vergleichbaren unvernetzten, löslichen Vinylesterpolymerisaten, gemessen im Schwingungsrheoneter der Fa. Rheometrics, aufweisen.

11. Polyvinylacetale nach einem oder mehreren der Ansprüche 1 bis 10, dadurch gekennzeichnet, daß bei der Messung der komplexen Viskosität ihrer Schmelzen bei 200 °C im Schwingungsrheometer der Fa. Rheometrics der Abfall der komplexen Viskosität im Meßbereich von 10⁻¹ bis 10² rad/s im Bereich von 6 bis 25 : 1 liegt.

12. Polyvinylacetale nach einem oder mehreren der Ansprüche 1 bis 11, dadurch gekennzeichnet, daß sie in gelierter bzw. plastifizierter Form vorliegen und Weichnachergehalte von 20 bis 50 Gew.-%, vorzugsweise 23 bis 35 Gew.-%, bezogen auf das gelierte Polyvinylacetal, aufweisen.

13. Verfahren zur Herstellung von Polyvinylacetalen mit verbessertem Schmelzviskositätsverhalten nach Ansprüchen 1 bis 12 durch Acetalisierung von niedrigvernetzten, löslichen Polyvinylalkoholen, dadurch gekennzeichnet, daß man zunächst ein niedrigvernetztes, lösliches Copolymerisat aus Vinylester und 0,001 bis 5 Mol-%, bezogen auf die Gesamtmolmenge der eingesetzten copolymerisationsfähigen Monomeren, mehrfach ethylenisch ungesättigten copolymerisationsfähigen Acrylamiden oder Methacrylamiden durch radikalisch initiierte Copolymerisation des Vinylesters it dem mehrfach ethylenisch ungesättigten Monomeren herstellt und das resultierende Copolymerisat anschließend durch Hydrolyse oder Alkoholyse in einen niedrigvernetzten löslichen Polyvinylalkohol überführt, diesen durch Umsetzung mit Aldehyden oder Aldehydacetalen unter Acetalisierungsbedingungen in ein niedrigvernetztes lösliches Polyvinylacetal umwandelt und das niedrigvernetzte lösliche Polyvinylacetal isoliert und gegebenenfalls unter Weichmacherzusatz plastifiziert.

14. Verfahren nach Anspruch 13, dadurch gekennzeichnet, daß man zur Herstellung des niedrigvernetzten löslichen Copolymerisats aus Vinylester und mehrfach ethylenisch ungesättigten copolymerisationsfähigen Monomeren die letzteren in Mengen von 0,01 bis 1 Mol-%, bezogen auf die Gesamtmolmenge der eingesetzten copolymerisationsfähigen Monomeren, einsetzt und die Copolymerisation als Lösungspolymerisation, wobei zusätzlich noch kleinere Mengen radikalkettenabbrechend wirkender Molekulargewichtsregler zugesetzt werden können, durchführt.

15. Verfahren nach Anspruch 13 oder 14, dadurch gekennzeichnet, daß man das niedrigvernetzte lösliche Copolymerisat aus Vinylester und mehrfach ethylenisch ungesättigten Monomeren durch alkalische Hydrolyse, Verseifung oder Umesterung in einen niedrigvernetzten löslichen Polyvinylalkohol überführt.

16. Verfahren nach einem oder mehreren der Ansprüche 13 bis 15, dadurch gekennzeichnet, daß man die Umsetzung des niedrigvernetzten löslichen Polyvinylalkohols oder dessen Gemischen mit unvernetzten löslichen Polyvinylalkoholen mit Aldehyden oder Aldehydacetalen in wäßrigem Medium oder in organischen Lösungsmitteln unter Acetalisierungsbedingungen und Zusatz eines Säurekatalysators durchführt.

17. Verwendung von niedrigvernetzten löslichen Polyvinylacetalen nach einem oder mehreren der Ansprüche 1 bis 12 bzw. hergestellt nach Ansprüche 13 bis 16 als Bestandteil von Beschichtungsmassen für diverse Substrate, vorzugsweise für Glas und Metalle, als Bindemittel für Pigmente, zur Herstellung von Druckfarben, von lichtempfindlichen Schichten, von Schmelzklebern, von lösungsmittelhaltigen oder wäßrigen Klebstoffen, von Beschichtungsmassen und Lackzubereitungen, gegebenenfalls unter Mitverwendung von Vernetzungsmitteln, als Dispergiermittel, als Schlichtemittel und Schmälzmittel in der Textilverarbeitung, für die Verklebung diverser Materialien wie Metalle, keramische Materialien, Kunststoffe, Fasern, Folien, Textilien, Papier, Holz, zur Herstellung von Formkörpern und Folien durch thermoplastische Verformung, als Werkstoff für thermoplastisch verarbeitbare Formkörper und als Beschichtungsmassen für Metalle, als Zwischenlagenfolien bei der Herstellung von Verbundgläsern sowie als Mischungskomponenten bzw. Verschnittkomponenten für übliche Polyvinylacetale.

18. Verwendung von niedrigvernetzten löslichen Polyvinylacetalen nach einem oder mehreren der Ansprüche 1 bis 12 bzw. hergestellt nach Ansprüchen 13 bis 16 zur Herstellung von Formkörpern oder Folien durch thermoplastische Verformung mit Gehalten von Weichmachern in Mengen von 20 bis 50 Gew.-%, vorzugsweise 23 bis 35 Gew.-%, bezogen auf die gesamte weichmacherhaltige thermoplastische polymere Formmasse, wobei letztere weitere anwendungsspezifische Hilfsstoffe enthalten kann.

19. Folien, enthaltend weichmacherhaltige niedrigvernetzte Polyvinylacetale nach Ansprüchen 1 bis 12 bzw. erhalten nach Ansprüchen 13 bis 16, vorzugsweise Polyvinylbutyrale, insbesondere als Zwischenlagenfolien in Verbundgläsern.

20. Kleb- oder Beschichtungsmittel, enthaltend niedrigvernetzte Polyvinylacetale nach Ansprüchen 1 bis 12 bzw. erhalten nach Ansprüchen 13 bis 16.

21. Formkörper, hergestellt aus niedrigvernetzten Polyvinylacetalen nach Ansprüchen 1 bis 12 bzw. erhalten nach Ansprüchen 13 bis 16.

## Patentansprüche (Patentansprüche für folgende(n) Vertragsstaat(en): ES)

1. Verfahren zur Herstellung von Polyvinylacetalen mit verbessertem Schmelzviskositätsverhalten durch Acetalisierung von niedrigvernetzten, löslichen Polyvinylalkoholen, dadurch gekennzeichnet, daß man zunächst ein niedrigvernetztes, lösliches Copolymerisat aus Vinylester und 0,001 bis 5 Mol-%, bezogen auf die Gesamtmolmenge der eingesetzten copolymerisationsfähigen Monomeren, mehrfach ethylenisch ungesättigten copolymerisationsfähigen Acrylamiden oder Methacrylamiden durch radikalisch initiierte Copolymerisation des Vinylesters mit dem mehrfach ethylenisch ungesättigten Monomeren herstellt und das resultierende Copolymerisat anschließend durch Hydrolyse oder Alkoholyse in einen niedrigvernetzten löslichen Polyvinylalkohol überführt, diesen durch Umsetzung mit Aldehyden oder Aldehydacetalen unter Acetalisierungsbedingungen in ein niedrigvernetztes lösliches Polyvinylacetal umwandelt und das niedrigvernetzte lösliche Polyvinylacetal isoliert und gegebenenfalls unter Weichmacherzusatz plastifiziert.

2. Verfahren nach Anspruch 1, dadurch gekennzeichnet, daß man zur Herstellung des niedrigvernetzten löslichen Copolymerisats aus Vinylester und mehrfach ethylenisch ungesättigten copolymerisationsfähigen Monomeren die letzteren in Mengen von 0,01 bis 1 Mol-%, bezogen auf die Gesamtmolmenge der eingesetzten copolymerisationsfähigen Monomeren, einsetzt und die Copolymerisation als Lösungspolymerisation, wobei zusätzlich noch kleinere Mengen radikalkettenabbrechend wirkender Molekulargewichtsregler zugesetzt werden können, durchführt.

3. Verfahren nach Anspruch 1 oder 2, dadurch gekennzeichnet, daß man das niedrigvernetzte lösliche Copolymerisat aus Vinylester und mehrfach ethylenisch ungesättigten Monomeren durch alkalische Hydrolyse, Verseifung oder Umesterung in einen niedrigvernetzten löslichen Polyvinylalkohol überführt.

4. Verfahren nach einem oder mehreren der Ansprüche 1 bis 3, dadurch gekennzeichnet, daß man die Umsetzung des niedrigvernetzten löslichen Polyvinylalkohols oder dessen Gemischen mit unvernetzten löslichen Polyvinylalkoholen mit Aldehyden oder Aldehydacetalen in wäßrigem Medium oder in organischen Lösungsmitteln unter Acetalisierungsbedingungen und Zusatz eines Säurekatalysators durchführt.

5. Verfahren nach einem oder mehreren der Ansprüche 1 bis 4, dadurch gekennzeichnet, daß die Ausgangscopolymerisate aus Vinylestern und mehrfach ethylenisch ungesättigten copolymerisationsfähigen Monomeren copolymerisierte Monomereinheiten aus Verbindungen der Formel I, 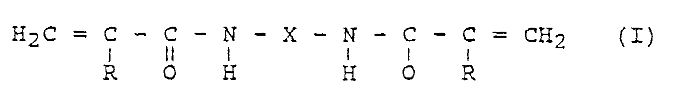 worin
R = H, -CH₃,
X = -(CHY)ₙ-, n = 1 bis 10, vorzugsweise 2 bis 4,
Y = H, -OH, vorzugsweise Y = -OH und n = 2,
bedeutet, enthalten.

6. Verfahren nach einem oder mehreren der Ansprüche 1 bis 5, dadurch gekennzeichnet, daß die Ausgangscopolymerisate als copolymerisierte Monomereinheiten Glyoxalbisacrylamid enthalten.

7. Verfahren nach einem oder mehreren der Ansprüche 1 bis 6, dadurch gekennzeichnet, daß die Ausgangscopolymerisate als Vinylestermonomereinheiten copolymerisierte Carbonsäurevinylester mit 3 bis 20 C-Atomen, vorzugsweise Vinylacetat oder Vinylpropionat, insbesondere Vinylacetat, und gegebenenfalls weitere monoethylenisch ungesättigte Comonomere enthalten.

8. Verfahren nach einem oder mehreren der Ansprüche 1 bis 7, dadurch gekennzeichnet, daß die niedrigvernetzten löslichen Ausgangspolyvinylalkohole Hydrolysegrade von 50 bis 100 Mol-%, vorzugsweise 95 bis 99,9 Mol-%, aufweisen.

9. Verfahren nach einem oder mehreren der Ansprüche 1 bis 8, dadurch gekennzeichnet, daß die Acetalisierung unter Verwendung von aliphatischen, cycloaliphatischen oder aromatischen Aldehyden mit 1 bis 20 C-Atomen, vorzugsweise Butyraldehyd, erfolgt.

10. Verfahren nach einem oder mehreren der Ansprüche 1 bis 9, dadurch gekennzeichnet, daß der Gehalt an nicht acetalisierten Vinylalkoholeinheiten in den Polyvinylacetalen 15 bis 28 Gew.-%, vorzugsweise 18 bis 24 Gew.-%, bezogen auf das Polyvinylacetal, beträgt.

11. Verfahren nach einem oder mehreren der Ansprüche 1 bis 10, dadurch gekennzeichnet , daß für die Acetalisierungsreaktion Gemische aus niedrigvernetzten löslichen Polyvinylalkoholen und unvernetzten löslichen Polyvinylalkoholen eingesetzt werden oder diese Polyvinylalkohole einzeln acetalisiert und danach miteinander vermischt werden.

12. Verfahren nach einem oder mehreren der Ansprüche 1 bis 11, dadurch gekennzeichnet, daß die Schmelzen der niedrigvernetzten, löslichen Ausgangsvinylestercopolymerisate bei 180 °C und einer Schwingkreisfrequenz von 10⁻¹ rad/s eine erhöhte komplexe Viskosität, vergleichsweise zu vergleichbaren unvernetzten, löslichen Vinylesterpolymerisaten, gemessen im Schwingungsrheometer der Fa. Rheometrics, aufweisen.

13. Verfahren nach einem oder mehreren der Ansprüche 1 bis 12, dadurch gekennzeichnet, daß bei der Messung der komplexen Viskosität der Schmelzen der Polyvinylacetale bei 200 °C im Schwingungsrheometer der Fa. Rheometrics der Abfall der komplexen Viskosität in Meßbereich von 10⁻¹ bis 10² rad/s im Bereich von 6 bis 25 : 1 liegt.

14. Verfahren nach einem oder mehreren der Ansprüche 1 bis 13, dadurch gekennzeichnet, daß die Polyvinylacetale in gelierter bzw. plastifizierter Form erhalten werden und Weichmachergehalte von 20 bis 50 Gew.-%, vorzugsweise 23 bis 35 Gew.-%, bezogen auf das gelierte Polyvinylacetal, aufweisen.

15. Verwendung von niedrigvernetzten löslichen Polyvinylacetalen hergestellt nach einem oder mehreren der Ansprüche 1 bis 14, als Bestandteil von Beschichtungsmassen für diverse Substrate, vorzugsweise für Glas und Metalle, als Bindemittel für Pigmente, zur Herstellung von Druckfarben, von lichtempfindlichen Schichten, von Schmelzklebern, von lösungsmittelhaltigen oder wäßrigen Klebstoffen, von Beschichtungsmassen und Lackzubereitungen, gegebenenfalls unter Mitverwendung von Vernetzungsmitteln, als Dispergiermittel, als Schlichtemittel und Schmälzmittel in der Textilverarbeitung, für die Verklebung diverser Materialien wie Metalle, keramische Materialien, Kunststoffe, Fasern, Folien, Textilien, Papier, Holz, zur Herstellung von Formkörpern und Folien durch thermoplastische Verformung, als Werkstoff für thermcplastisch verarbeitbare Formkörper und als Beschichtungsmassen für Metalle, als Zwischenlagenfolien bei der Herstellung von Verbundgläsern sowie als Mischungskomponenten bzw. Verschnittkomponenten für übliche Polyvinylacetale.

16. Verwendung von niedrigvernetzten löslichen Polyvinylacetalen hergestellt nach einem oder mehreren der Ansprüche 1 bis 14, zur Herstellung von Formkörpern oder Folien durch thermoplastische Verformung mit Gehalten von Weichmachern in Mengen von 20 bis 50 Gew.-%, vorzugsweise 23 bis 35 Gew.-%, bezogen auf die gesamte weichmacherhaltige thermoplastische polymere Formmasse, wobei letztere weitere anwendungsspezifische Hilfsstoffe enthalten kann.

17. Verwendung von Folien, enthaltend weichmacherhaltige niedrigvernetzte Polyvinylacetale hergestellt nach Ansprüchen 1 bis 14, vorzugsweise Polyvinylbutyrale, insbesondere als Zwischenlagenfolien in Verbundgläsern.

18. Kleb- oder Beschichtungsmittel, enthaltend niedrigvernetzte Polyvinylacetale hergestellt nach Ansprüchen 1 bis 14.

19. Formkörper, enthaltend niedrigvernetzte Polyvinylacetale, hergestellt nach Ansprüchen 1 bis 14.

## Claims (Claims for the following Contracting State(s): AT, BE CH, DE ,FR, GB, IT, LI, NL, PT, SE)

1. Polyvinyl acetals having improved melt viscosity characteristics, prepared from polyvinyl alcohols and aldehydes or aldehyde acetals under acetalization conditions, characterized in that they are derived from soluble polyvinyl alcohols having a low degree of crosslinking, which polyvinyl alcohols have been obtained by hydrolysis or alcoholysis of soluble copolymers, having a low degree of crosslinking, of vinyl esters and 0.001 to 5 mol-%, relative to the total molar amount of the copolymerizable monomers used, of copolymerizable acrylamides or methacrylamides of multiple ethylenic unsaturation, and have been reacted with aldehydes or aldehyde acetals under acetalization conditions to give soluble polyvinyl acetals having a low degree of crosslinking.

2. Polyvinyl acetals as claimed in claim 1, wherein the starting copolymers of vinyl esters and copolymerizable monomers of multiple ethylenic unsaturation contain copolymerized monomer units from compounds of the formula I 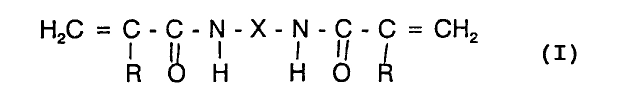 wherein
R = -H, -CH₃
X = -(CHY)ₙ-, n being 1 to 10, preferably 2 to 4, and
Y = -H, -OH, and preferably
Y = -OH and n = 2.

3. Polyvinyl acetals as claimed in one or more of claims 1 and 2, wherein the starting copolymers contain glyoxal bisacrylamide as copolymerized monomer units.

4. Polyvinyl acetals as claimed in one or more of claims 1 to 3, wherein the starting copolymers contain 0.01 to 1 mol%, relative to the total molar amount of the copolymerizable monomers used, of monomer units from copolymerizable monomers of multiple ethylenic unsaturation.

5. Polyvinyl acetals as claimed in one or more of claims 1 to 4, wherein the starting copolymers contain, as vinyl ester monomer units, copolymerized carboxylic acid vinyl esters having 3 to 20 carbon atoms, preferably vinyl acetate or vinyl propionate, in particular vinyl acetate, and optionally further monoethylenically unsaturated comonomers.

6. Polyvinyl acetals as claimed in one or more of claims 1 to 5, wherein the soluble starting polyvinyl alcohols having a low degree of crosslinking have a degree of hydrolysis of 50 to 100 mol%, preferably of 95 to 99.9 mol%.

7. Polyvinyl acetals as claimed in one or more of claims 1 to 6, whose acetalization was carried out using aliphatic, cycloaliphatic or aromatic aldehydes having 1 to 20 carbon atoms, preferably butyraldehyde.

8. Polyvinyl acetals as claimed in one or more of claims 1 to 7, which contain 15 to 28% by weight, preferably 18 to 24% by weight, relative to the polyvinyl acetals, of non-acetalized vinyl alcohol units.

9. Polyvinyl acetals as claimed in one or more of claims 1 to 8, wherein mixtures of soluble polyvinyl alcohols having a low degree of crosslinking and non-crosslinked soluble polyvinyl alcohols have been used for the acetalization reaction, or said polyvinyl alcohols have been acetalized individually and then mixed with one another.

10. Polyvinyl acetals as claimed in one or more of claims 1 to 9, wherein, compared to comparable non-crosslinked, soluble vinyl ester polymers, the melts of the soluble starting vinyl ester copolymers having a low degree of crosslinking have a higher complex viscosity at 180°C and a vibration cycle frequency of 10⁻¹ rad/s, measured in the oscillation rheometer from Rheometrics.

11. Polyvinyl acetals as claimed in one or more of claims 1 to 10, wherein, on measuring the complex viscosities of their melts at 200°C in the oscillation rheometer from Rheometrics, the drop in the complex viscosities in the measurement range from 10⁻¹ to 10² rad/s is in the range from 6 to 25:1.

12. Polyvinyl acetals as claimed in one or more of claims 1 to 11, which are in the gelled or plasticized form and have plasticizer contents of 20 to 50% by weight, preferably of 23 to 35% by weight, based on the gelled polyvinyl acetals.

13. A process for the preparation of polyvinyl acetals having improved melt viscosity characteristics as claimed in claims 1 to 12, by acetalization of soluble polyvinyl alcohols having a low degree of crosslinking, wherein a soluble copolymer having a low degree of crosslinking is first prepared from vinyl esters and 0.001 to 5 mol-%, relative to the total molar amount of the copolymerizable monomers used, of copolymerizable acrylamides or methacrylamides of multiple ethylenic unsaturation, by free radical-initiated copolymerization of the vinyl ester with the monomer of multiple ethylenic unsaturation, and the resulting copolymer is then converted by hydrolysis or alcoholysis into a soluble polyvinyl alcohol having a low degree of crosslinking, the latter is converted into a soluble polyvinyl acetal having a low degree of crosslinking by reaction with aldehydes or aldehyde acetals under acetalization conditions and the soluble polyvinyl acetal having a low degree of crosslinking is isolated and optionally plasticized with the addition of plasticizer.

14. The process as claimed in claim 13, wherein, for the preparation of the soluble copolymer having a low degree of crosslinking, from vinyl ester and copolymerizable monomers of multiple ethylenic unsaturation, the latter are used in amounts of 0.01 to 1 mol%, relative to the total molar amount of the copolymerizable monomers used, and the copolymerization is carried out as solution polymerization, it also being possible additionally to add minor amounts of molecular weight-regulating agents which break off the radical chains.

15. The process as claimed in claim 13 or 14, wherein the soluble copolymer, having a low degree of crosslinking, of vinyl ester and monomers having multiple ethylenic unsaturations is converted by alkaline hydrolysis, saponification or transesterification into a soluble polyvinyl alcohol having a low degree of crosslinking.

16. The process as claimed in one or more of claims 13 to 15, wherein the reaction of the soluble polyvinyl alcohol having a low degree of crosslinking, or of mixtures thereof with non-crosslinked soluble polyvinyl alcohols, with aldehydes or aldehyde acetals is carried out in an aqueous medium or in organic solvents under acetalization conditions and with the addition of an acid catalyst.

17. The use of soluble polyvinyl acetals having a low degree of crosslinking, as claimed in one or more of claims 1 to 12 or prepared as claimed in claims 13 to 16, as a constituent of coating compositions for various substrates, preferably for glass and metals, as binders for pigments, for the preparation of printing inks, light-sensitive coatings, hot-melt adhesives, solvent-containing or aqueous adhesives, coating compositions and paint formulations, optionally with co-use of crosslinking agents, as dispersing agents, as sizers and oiling agents in textile processing, for bonding various materials, such as metals, ceramic materials, plastics, fibers, films, textiles, paper and wood, for the preparation of moldings and sheets by thermoplastic deformation, as a material for moldings which can be processed thermoplastically and as coating compositions for metals, as interlay sheets in the production of composite glasses and as mixing components or diluent components for conventional polyvinyl acetals.

18. The use of soluble polyvinyl acetals having a low degree of crosslinking, as claimed in one or more of claims 1 to 12 and prepared as claimed in claims 13 to 17, for the production of moldings or sheets by thermoplastic deformation, with plasticizer contents in amounts of 20 to 50% by weight, preferably 23 to 35% by weight, relative to the total plasticizer-containing thermoplastic polymeric molding composition, it being possible for the latter to contain further use-specific auxiliaries.

19. Sheets, wherein plasticizer-containing polyvinyl acetals having a low degree of crosslinking, as claimed in claims 1 to 12 and obtained as claimed in claims 13 to 16, preferably polyvinyl butyrals, are contained, in particular interlay sheets in composite glasses.

20. Adhesive or coating agents, containing polyvinyl acetals having a low degree of crosslinking, as claimed in claims 1 to 12 and obtained as claimed in claims 13 to 16.

21. Moldings produced from polyvinyl acetals having a low degree of crosslinking, as claimed in claims 1 to 12 and obtained as claimed in claims 13 to 16.

## Claims (Claims for the following Contracting State(s): ES)

1. A process for the preparation of polyvinyl acetals having improved melt viscosity characteristics, by acetalization of soluble polyvinyl alcohols having a low degree of crosslinking, wherein a soluble copolymer having a low degree of crosslinking is first prepared from vinyl ester and 0.001 to 5 mol%, relative to the total molar amount of the copolymerizable monomers used, of copolymerizable acrylamides or methacrylamides of multiple ethylenic unsaturation, by free radical-initiated copolymerization of the vinyl ester with the monomer of multiple ethylenic unsaturation, and the resulting copolymer is then converted by hydrolysis or alcoholysis into a soluble polyvinyl alcohol having a low degree of crosslinking, the latter is converted into a soluble polyvinyl acetal having a low degree of crosslinking by reaction with aldehydes or aldehyde acetals under acetalization conditions, and the soluble polyvinyl acetal having a low degree of crosslinking is isolated and optionally plasticized with the addition of plasticizer.

2. The process as claimed in claim 1, wherein, for the preparation of the soluble copolymer having a low degree of crosslinking, from vinyl ester and copolymerizable monomers of multiple ethylenic unsaturation, the latter are used in amounts of 0.01 to 1 mol%, with respect to the total molar amount of the copolymerizable monomers used, and the copolymerization is carried out as solution polymerization, it also being possible additionally to add minor amounts of molecular weight-regulating agents which break off the radical chains.

3. The process as claimed in claim 1 or 2, wherein the soluble copolymer having a low degree of crosslinking, of vinyl ester and monomers having multiple ethylenic unsaturations is converted by alkaline hydrolysis, saponification or transesterification into a soluble polyvinyl alcohol having a low degree of crosslinking.

4. The process as claimed in one or more of claims 1 to 3, wherein the reaction of the soluble polyvinyl alcohol having a low degree of crosslinking or of mixtures thereof with non-crosslinked soluble polyvinyl alcohols, with aldehydes or aldehyde acetals is carried out in an aqueous medium or in organic solvents under acetalization conditions and with the addition of an acid catalyst.

5. The process as claimed in one or more of claims 1 to 4, wherein the starting copolymers of vinyl esters and copolymerizable monomers having multiple ethylenic unsaturation contain copolymerized monomer units from compounds of the formula I 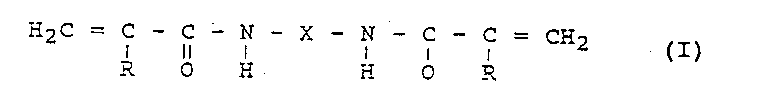 wherein
R = -H, -CH₃
X = -(CHY)ₙ-, n being 1 to 10, preferably 2 to 4, and
Y = -H, -OH, and preferably
Y = -OH and n = 2.

6. The process as claimed in one or more of claims 1 to 5, wherein the starting copolymers contain glyoxal bisacrylamide as copolymerized monomer units.

7. The process as claimed in one or more of claims 1 to 6, wherein the starting copolymers contain, as vinyl ester monomer units, copolymerized carboxylic acid vinyl esters having 3 to 20 carbon atoms, preferably vinyl acetate or vinyl propionate, in particular vinyl acetate, and optionally further monoethylenically unsaturated comonomers.

8. The process as claimed in one or more of claims 1 to 7, wherein the soluble starting polyvinyl alcohols having a low degree of crosslinking have a degree of hydrolysis of 50 to 100 mol%, preferably of 95 to 99.9 mol%.

9. The process as claimed in one or more of claims 1 to 8, wherein acetalization is carried out using aliphatic, cycloaliphatic or aromatic aldehydes having 1 to 20 carbon atoms, preferably butyraldehyde.

10. The process as claimed in one or more of claims 1 to 9, wherein the content of non-acetalized vinyl alcohol units in the polyvinyl acetals is 15 to 28% by weight, preferably 18 to 24% by weight, relative to the polyvinyl acetals.

11. The process as claimed in one or more of claims 1 to 10, wherein mixtures of soluble polyvinyl alcohols having a low degree of crosslinking and non-crosslinked soluble polyvinyl alcohols are used for the acetalization reaction, or said polyvinyl alcohols are acetalized individually and then mixed with one another.

12. The process as claimed in one or more of claims 1 to 11, wherein, compared to comparable non-crosslinked, soluble vinyl ester polymers, the melts of the soluble starting vinyl ester copolymers having a low degree of crosslinking have a higher complex viscosity at 180°C and a vibration cycle frequency of 10⁻¹ rad/s, measured in the oscillation rheometer from Rheometrics.

13. The process as claimed in one or more of claims 1 to 12, wherein, on measuring the complex viscosities of the melts of the polyvinyl acetals at 200°C in the oscillation rheometer from Rheometrics, the drop in the complex viscosities in the measurement range from 10⁻¹ to 10² rad/s is in the range from 6 to 25:1.

14. The process as claimed in one or more of claims 1 to 13, wherein the polyvinyl acetals are obtained in the gelled or plasticized form and have plasticizer contents of 20 to 50% by weight, preferably of 23 to 35% by weight, based on the gelled polyvinyl acetals.

15. The use of soluble polyvinyl acetals having a low degree of crosslinking, prepared as claimed in one or more of claims 1 to 14, as a constituent of coating compositions for various substrates, preferably for glass and metals, as binders for pigments, for the preparation of printing inks, light sensitive coatings, hot-melt adhesives, solvent-containing or aqueous adhesives, coating compositions and paint formulations, optionally with co-use of crosslinking agents, as dispersing agents, as sizers and oiling agents in textile processing, for bonding various materials, such as metals, ceramic materials, plastics, fibers, films, textiles, paper and wood, for the preparation of moldings and sheets by thermoplastic deformation, as a material for moldings which can be processed thermoplastically and as coating compositions for metals, as interlay sheets in the production of composite glasses, and as mixing components or diluent components for conventional polyvinyl acetals.

16. The use of soluble polyvinyl acetals having a low degree of crosslinking, prepared as claimed in one or more of claims 1 to 14, for the production of moldings or sheets by thermoplastic deformation with plasticizer contents in amounts of 20 to 50% by weight, preferably 23 to 35% by weight, relative to the total plasticizer-containing thermoplastic polymeric molding composition, it being possible for the latter to contain further use-specific auxiliaries.

17. The use of sheets, containing plasticizer-containing polyvinyl acetals having a low degree of crosslinking and prepared as claimed in claims 1 to 14, preferably polyvinyl butyrals, in particular as interlay sheets in composite glasses.

18. Adhesive or coating agents, containing polyvinyl acetals having a low degree of crosslinking and prepared as claimed in claims 1 to 14.

19. Moldings containing polyvinyl acetals having a low degree of crosslinking and prepared as claimed in claims 1 to 14.

## Revendications (Revendications pour l'(les) Etat(s) contractant(s) suivant(s): AT, BE, CH, DE, FR, GB, IT, LI, NL, PT, SE)

1. Poly(acétals de vinyle) ayant une viscosité à chaud améliorée, préparés à partir des poly(alcools vinyliques) et des aldéhydes ou aldéhydes-acétals dans les conditions d'acétalisation, caractérisés en ce qu'ils dérivent des poly(alcools vinyliques) solubles, faiblement réticulés, obtenus par hydrolyse ou alcoolyse des copolymères solubles, faiblement réticulés, des esters vinyliques et de 0,001 à 5 % en moles, par rapport à la quantité totale en moles de monomères copolymérisables utilisés, d'acrylamides ou de méthacrylamides copolymérisables à multiple insaturation éthylénique et on fait réagir avec des aldéhydes ou des aldéhydes-acétals dans les conditions d'acétalisation pour obtenir des poly(acétals de vinyle) solubles, faiblement réticulés.

2. Poly(acétals de vinyle) selon la revendication 1, caractérisés en ce que les copolymères de départ des esters vinyliques et des monomères copolymérisables à multiple insaturation éthylénique contiennent des motifs monomères copolymérisés des composés de formule (I) 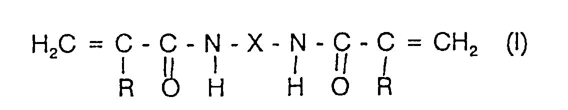 dans laquelle
R = -H, -CH₃
X = -(CHY)ₙ₋, n = 1 à 10, de préférence de 2 à 4,
Y = -H, -OH, de préférence Y = -OH et
n = 2.

3. Poly(acétals de vinyle) selon une ou plusieurs des revendications 1 et 2, caractérisés en ce que les copolymères de départ contiennent comme motifs monomères copolymérisés du bis-acrylamide de l'acide glyoxylique.

4. Poly(acétals de vinyle) selon une ou plusieurs des revendications 1 à 3, caractérisés en ce que les copolymères de départ contiennent de 0,01 à 1 % en moles, par rapport à la quantité en moles totale de monomères copolymérisables utilisés, de motifs monomères de monomères copolymérisables à multiple insaturation éthylénique.

5. Poly(acétals de vinyle) selon une ou plusieurs des revendications 1 à 4, caractérisés en ce que les copolymères de départ contiennent comme motifs monomères esters vinyliques des esters vinyliques des acides carboxyliques copolymérisés comportant de 3 à 20 atomes de carbone, de préférence l'acétate de vinyle ou le propionate de vinyle, plus particulièrement l'acétate de vinyle, et éventuellement d'autres comonomères à insaturation monoéthylénique.

6. Poly(acétals de vinyle) selon une ou plusieurs des revendications 1 à 5, caractérisés en ce que les poly(alcools vinyliques) de départ solubles, faiblement réticulés, présentent un degré d'hydrolyse de 50 à 100 % en moles, de préférence de 95 à 99,9 % en moles.

7. Poly(acétals de vinyle) selon une ou plusieurs des revendications 1 à 6, caractérisés en ce que l'on effectue leur acétalisation en utilisant des aldéhydes aliphatiques, cycloaliphatiques ou aromatiques avec 1 à 20 atomes de carbone, de préférence l'aldéhyde butyrique.

8. Poly(acétals de vinyle) selon une ou plusieurs des revendications 1 à 7, caractérisés en ce que leur teneur en motifs alcool vinylique non acétalisé est de 15 à 28 % en poids, de préférence de 18 à 24 % en poids par rapport au poly(acétal de vinyle).

9. Poly(acétals de vinyle) selon une ou plusieurs des revendications 1 à 8, caractérisés en ce que l'on utilise pour la réaction d'acétalisation des mélanges de poly(alcools vinyliques) solubles, faiblement réticulés, et de poly(alcools vinyliques) solubles, non réticulés, ou on acétalise ces poly(alcools vinyliques) individuellement et ensuite on les mélange l'un à l'autre.

10. Poly(acétals de vinyle) selon une ou plusieurs des revendications 1 à 9, caractérisés en ce que les matières fondues des copolymères d'esters vinyliques de départ solubles, faiblement réticulés présentent, à 180 °C et une fréquence de circuit oscillant de 10⁻¹ rad/s, une viscosité complexe accrue, par rapport aux polymères des esters vinyliques solubles, non réticulés, comparables, mesurée à l'aide d'un rhéomètre oscillant de la société Rheometrics.

11. Poly(acétals de vinyle) selon une ou plusieurs des revendications 1 à 10, caractérisés en ce que lorsqu'on mesure la viscosité complexe de leurs matières fondues à 200 °C à l'aide d'un rhéomètre oscillant de la société Rheometrics, la chute de la viscosité complexe dans le domaine mesuré de 10⁻¹ à 10² rad/s est située dans l'intervalle de 6 à 25:1.

12. Poly(acétals de vinyle) selon une ou plusieurs des revendications 1 à 11, caractérisés en ce qu'ils sont présents sous forme gélifiée ou plastifiée, et présentent des teneurs en plastifiant de 20 à 50 % en poids, de préférence de 23 à 35 % en poids par rapport aux poly(acétals de vinyle) gélifiés.

13. Procédé de préparation de poly(acétals de vinyle) ayant une viscosité à chaud améliorée selon les revendications 1 à 12, par acétalisation de poly(alcools vinyliques) solubles, faiblement réticulés, caractérisés en ce que, d'abord on prépare un copolymère soluble, faiblement réticulé, de l'ester vinylique et de 0,001 à 5 % en moles, par rapport à la quantité totale en moles des monomères copolymérisables utilisés, d'acrylamides ou de méthacrylamides copolymérisables à multiple insaturation éthylénique, par copolymérisation à amorce radicalaire de l'ester vinylique avec les monomères à multiple insaturation éthylénique et ensuite, on transforme le copolymère résultant par hydrolyse ou alcoolyse en un poly(alcool vinylique) soluble, faiblement réticulé, on convertit celui-ci par réaction avec des aldéhydes ou des aldéhydes-acétals dans les conditions d'acétalisation en un poly(acétal de vinyle) soluble, faiblement réticulé, et on isole le poly(acétal de vinyle) soluble, faiblement réticulé, et éventuellement, on plastifie en ajoutant du plastifiant.

14. Procédé selon la revendication 13, caractérisé en ce que, pour la préparation du copolymère de l'ester vinylique soluble, faiblement réticulé, et des monomères copolymérisables à multiple insaturation éthylénique, on utilise ces derniers en une quantité de 0,01 à 1 % en moles par rapport à la quantité totale en moles de monomères copolymérisables utilisés, et on met en oeuvre la copolymérisation comme une polymérisation en solution, en pouvant ajouter encore, de plus, de petites quantités de régulateurs du poids moléculaire agissant comme agents de rupture de chaîne radicalaire.

15. Procédé selon la revendication 13 ou 14, caractérisé en ce que l'on transforme le copolymère soluble faiblement réticulé de l'ester vinylique et des monomères à multiple insaturation éthylénique par hydrolyse alcaline, par saponification ou par transestérification, en un poly(alcool vinylique) soluble, faiblement réticulé.

16. Procédé selon une ou plusieurs des revendications 13 à 15, caractérisé en ce que l'on met en oeuvre la réaction du poly(alcool vinylique) soluble, faiblement réticulé, ou ses mélanges avec les poly(alcools vinyliques) solubles, non réticulés, avec des aldéhydes ou des aldéhydes-acétals en milieu aqueux ou dans des solvants organiques dans les conditions d'acétalisation et on ajoute un catalyseur acide.

17. Utilisation des poly(acétals de vinyle) solubles, faiblement réticulés, selon une ou plusieurs des revendications 1 à 12, respectivement préparés selon les revendications 13 à 16, comme constituants des matières pour enduire différents substrats, de préférence le verre et les métaux, comme liants pour des pigments, pour la préparation d'encres d'imprimerie, de couches photosensibles, d'adhésifs fusibles, d'adhésifs contenant des solvants ou aqueux, de matières pour enduire et de préparations de vernis, éventuellement en utilisant conjointement des agents réticulants, comme dispersants, comme agents d'encollage, comme préparation d'ensimage dans le traitement des textiles, pour le collage de différentes matières telles que les métaux, les matières céramiques, les matières plastiques, les fibres, les feuilles, les textiles, le papier, le bois, pour la préparation de corps façonnés et de feuilles par moulage thermoplastique, comme matériaux pour la préparation de corps façonnés mis en oeuvre de façon thermoplastique et comme matières pour enduire des métaux, comme feuilles intercalaires dans la préparation de verres feuilletés ainsi que comme constituants de mélanges ou bien fluidifiants pour des poly(acétals de vinyle) usuels.

18. Utilisation de poly(acétals de vinyle) solubles, faiblement réticulés, selon une ou plusieurs des revendications 1 à 12, respectivement préparés selon les revendications 13 à 16, pour la préparation de corps façonnés ou de feuilles par moulage thermoplastique ayant des teneurs en plastifiants en quantités de 20 à 50 % en poids, de préférence de 23 à 35 % en poids par rapport au poids total de la matière polymère thermoplastique à mouler, contenant du plastifiant, cette dernière pouvant contenir d'autres adjuvants spécifiques à l'application.

19. Feuilles contenant des poly(acétals de vinyle) faiblement réticulés, contenant du plastifiant, selon les revendications 1 à 12, respectivement obtenus selon les revendications 13 à 16, de préférence des poly(butyrals de vinyle), plus particulièrement comme feuilles intercalaires dans les verres feuilletés.

20. Agents adhésifs ou agents d'enduction contenant des poly(acétals de vinyle) faiblement réticulés, selon les revendications 1 à 12, respectivement obtenus selon les revendications 13 à 16.

21. Corps façonnés préparés à partir de poly(acétals de vinyle) faiblement réticulés, selon les revendications 1 à 12, respectivement obtenus selon les revendications 13 à 16.

## Revendications (Revendications pour l'(les) Etat(s) contractant(s) suivant(s): ES)

1. Procédé pour la préparation de poly(acétals de vinyle) ayant une viscosité à chaud améliorée par acétalisation de poly(alcools vinyliques) solubles, faiblement réticulés, caractérisé en ce que l'on prépare d'abord un copolymère soluble, faiblement réticulé, à partir de l'ester vinylique et de 0,001 à 5 % en moles, par rapport à la quantité totale en moles de monomères copolymérisables utilisés, d'acrylamides ou de méthacrylamides copolymérisables à multiple insaturation éthylénique par copolymérisation à amorce radicalaire de l'ester vinylique avec le monomère à multiple insaturation éthylénique et ensuite on convertit le copolymère résultant par hydrolyse ou alcoolyse en un poly(alcool vinylique) soluble, faiblement réticulé, on transforme celui-ci par réaction avec des aldéhydes ou des aldéhydes-acétals dans les conditions d'acétalisation en un poly(acétal de vinyle') soluble, faiblement réticulé, et en ce que l'on isole le poly(acétal de vinyle) soluble, faiblement réticulé, et éventuellement on le plastifie en ajoutant du plastifiant.

2. Procédé selon la revendication 1, caractérisé en ce que pour la préparation du copolymère soluble, faiblement réticulé, à partir de l'ester vinylique et de monomères copolymérisables à multiple insaturation éthylénique, on utilise ces derniers dans une quantité de 0,01 à 1 % en moles par rapport à la quantité totale en moles de monomères copolymérisables utilisés, et on met en oeuvre la copolymérisation comme une polymérisation en solution, en pouvant ajouter encore, de plus, de petites quantités de régulateurs de poids moléculaire agissant comme agents de rupture de chaîne radicalaire.

3. Procédé selon la revendication 1 ou 2, caractérisé en ce que l'on transforme le copolymère soluble, faiblement réticulé, de l'ester vinylique et des monomères à multiple insaturation éthylénique, par hydrolyse alcaline, par saponification ou pat transestérification, en un poly(alcool vinylique) soluble, faiblement réticulé.

4. Procédé selon une ou plusieurs des revendications 1 à 3, caractérisé en ce que l'on met en oeuvre la réaction du poly(alcool vinylique) soluble, faiblement réticulé, ou de ses mélanges avec des poly(alcools vinyliques) solubles, non réticulés, avec des aldéhydes ou des aldéhydes-acétals en milieu aqueux ou en milieu de solvants organiques dans les conditions d'acétalisation et en ajoutant un catalyseur acide.

5. Procédé selon une ou plusieurs des revendications 1 à 4, caractérisé en ce que les copolymères de départ des esters vinyliques et des monomères copolymérisables à multiple insaturation éthylénique contiennent des motifs monomères copolymérisés des composés de formule (I) 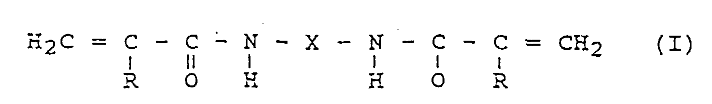 dans laquelle
R = -H, -CH₃
X = -(CHY)ₙ₋, n = 1 à 10, de préférence de 2 à 4,
Y = -H, -OH, de préférence Y = -OH et
n = 2.

6. Procédé selon une ou plusieurs des revendications 1 à 5, caractérisé en ce que les copolymères de départ contiennent comme motifs monomères copolymérisés le bis-acrylamide de l'acide glyoxylique.

7. Procédé selon une ou plusieurs des revendications 1 à 6, caractérisé en ce que les copolymères de départ contiennent en tant que motifs esters vinyliques monomères, des esters vinyliques des acides carboxyliques copolymérisés avec 2 à 20 atomes de carbone, de préférence l'acétate de vinyle ou le propionate de vinyle, plus particulièrement l'acétate de vinyle, et éventuellement d'autres comonomères à insaturation monoéthylénique.

8. Procédé selon une ou plusieurs des revendications 1 à 7, caractérisé en ce que les poly(alcools vinyliques) de départ solubles, faiblement réticulés, présentent des degrés d'hydrolyse de 50 à 100 % en moles, de préférence de 95 à 99,9 % en moles.

9. Procédé selon une ou plusieurs des revendications 1 à 8, caractérisé en ce que l'on met en oeuvre l'acétalisation en utilisant des aldéhydes aliphatiques, cycloaliphatiques ou aromatiques avec 1 à 20 atomes de carbone, de préférence l'aldéhyde butyrique.

10. Procédé selon une ou plusieurs des revendications 1 à 9, caractérisé en ce que la teneur en motifs alcool vinylique non acétalisé dans les poly(acétals de vinyle) est de 15 à 28 % en poids, de préférence de 18 à 24 % en poids par rapport au poly(acétal de vinyle).

11. Procédé selon une ou plusieurs des revendications 1 à 10, caractérisé en ce que, pour la réaction d'acétalisation, on utilise des mélanges de poly(alcools vinyliques) solubles, faiblement réticulés, et de poly(alcools vinyliques) solubles, non réticulés, ou on acétalise ces poly(alcools vinyliques) individuellement et ensuite on les mélange l'un à l'autre.

12. Procédé selon une ou plusieurs des revendications 1 à 11, caractérisé en ce que les matières fondues des copolymères des esters vinyliques de départ solubles, faiblement réticulés, à 180 °C et une fréquence de circuit oscillant de 10⁻¹ rad/s, présentent une viscosité complexe accrue, par rapport aux polymères d'esters vinyliques solubles, non réticulés, comparables, mesurée à l'aide d'un rhéomètre oscillant de la société Rheometrics.

13. Procédé selon une ou plusieurs des revendications 1 à 12, caractérisé en ce que, lorsqu'on mesure la viscosité complexe des matières fondues des poly(acétals de vinyle) à 200 °C à l'aide du rhéomètre oscillant de la société Rheometrics, la chute de la viscosité complexe dans l'intervalle mesuré de 10⁻¹ à 10² rad/s est situé dans le domaine de 6 à 25:1.

14. Procédé selon une ou plusieurs des revendications 1 à 13, caractérisé en ce que les poly(acétals de vinyle) sont obtenus sous forme gélifiée, ou bien plastifiée, et présentent des teneurs en plastifiant de 20 à 50 % en poids, de préférence de 23 à 35 % en poids par rapport aux poly(acétals de vinyle) gélifiés.

15. Utilisation des poly(acétals de vinyle) solubles, faiblement réticulés, préparés selon une ou plusieurs des revendications 1 à 14, comme constituants des matières pour enduire pour différents substrats, de préférence le verre et les métaux, comme liants pour des pigments, pour la préparation d'encres d'imprimerie, de couches photosensibles, d'adhésifs fusibles, d'adhésifs contenant des solvants ou aqueux, de matières pour enduire et de préparations de vernis, éventuellement en utilisant conjointement des agents réticulants, comme agents dispersants, agents d'encollage, des agents d'ensimage dans le traitement des textiles, pour le collage de différentes matières telles que les métaux, les matières céramiques, les matières plastiques, les fibres, les feuilles, les textiles, le papier, le bois, pour la préparation de corps façonnés et de feuilles par moulage thermoplastique, comme matériaux pour des corps façonnés que l'on peut mettre en oeuvre par moulage thermoplastique et comme matières pour enduire des métaux, plus particulièrement comme feuilles intercalaires dans la préparation des verres feuilletés ainsi que comme constituants de mélanges, respectivement comme diluants pour des poly(acétals de vinyle) usuels.

16. Utilisation de poly(acétals de vinyle) solubles, faiblement réticulés, préparés selon une ou plusieurs des revendications 1 à 14, pour la préparation de corps moulés ou de feuilles par moulage thermoplastique, ayant des teneurs en plastifiant en quantités de 20 à 50 % en poids, de préférence de 23 à 35 % en poids par rapport au poids total de la matière à mouler polymère thermoplastique contenant des plastifiants, ces dernières pouvant contenir d'autres adjuvants spécifiques à l'application.

17. Utilisation de feuilles contenant des poly(acétals de vinyle) faiblement réticulés, contenant des plastifiants, préparés selon les revendications 1 à 14, de préférence des poly(butyrals de vinyle), notamment comme couches intercalaires dans les verres feuilletés.

18. Agents adhésifs ou agent d'enduction contenant des poly(acétals de vinyle) faiblement réticulés, préparés selon les revendications 1 à 14.

19. Corps façonnés contenant des poly(acétals de vinyle) faiblement réticulés, préparés selon les revendications 1 à 14.
